(19) Europäisches Patentamt European Patent Office Office européen des brevets

(11) **EP 4 557 170 A1**

(12) **EUROPEAN PATENT APPLICATION**
published in accordance with Art. 153(4) EPC

(43) Date of publication:
**21.05.2025 Bulletin 2025/21**

(21) Application number: **23851447.5**

(22) Date of filing: **29.06.2023**

(51) International Patent Classification (IPC):
**G06N 3/063** (2023.01)

(52) Cooperative Patent Classification (CPC):
**G06N 3/063**

(86) International application number:
**PCT/CN2023/104035**

(87) International publication number:
**WO 2024/032220 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 CN 202210956475**

(71) Applicant: **Huawei Technologies Co., Ltd.
Shenzhen, Guangdong 518129 (CN)**

(72) Inventors:
• **LIANG, Xiaohao
  Shenzhen, Guangdong 518129 (CN)**
• **YANG, Wenbin
  Shenzhen, Guangdong 518129 (CN)**
• **ZENG, Zhong
  Shenzhen, Guangdong 518129 (CN)**

(74) Representative: **Maiwald GmbH
Engineering
Elisenhof
Elisenstrasse 3
80335 München (DE)**

(54) **IN-MEMORY COMPUTING CIRCUIT-BASED NEURAL NETWORK COMPENSATION METHOD, APPARATUS AND CIRCUIT**

(57) A method, an apparatus, and a circuit for compensating a neural network based on a computing-in-memory circuit are provided and relate to the field of computer technologies, to compensate for a computation error generated when the computing-in-memory circuit performs neural network computation. Therefore, precision of multiply-accumulate is improved and an end-to-end effect of the neural network is ensured. The method includes: obtaining configuration information, where the configuration information indicates at least one to-be-compensated multiply-accumulate layer in a plurality of multiply-accumulate layers of the neural network and at least one compensation circuit corresponding to the at least one multiply-accumulate layer, and the at least one compensation circuit is configured to compensate for a computation error of the at least one multiply-accumulate layer; and compensating, in a process in which the computing-in-memory circuit runs the neural network, a computation result of the at least one multiply-accumulate layer through the at least one compensation circuit indicated by the configuration information.

Obtain configuration information, where the configuration information indicates at least one to-be-compensated multiply-accumulate layer and at least one compensation circuit corresponding to the at least one multiply-accumulate layer — S301

Compensate, in a process in which a computing-in-memory circuit runs a neural network, a computation result of the at least one multiply-accumulate layer through the at least one compensation circuit indicated by the configuration information — S302

FIG. 4

EP 4 557 170 A1

## Description

This application claims priority to Chinese Patent Application No. 202210956475.2, filed with the China National Intellectual Property Administration on August 10, 2022 and entitled "METHOD, APPARATUS, AND CIRCUIT FOR COMPENSATING NEURAL NETWORK BASED ON COMPUTING-IN-MEMORY CIRCUIT", which is incorporated herein by reference in its entirety.

## TECHNICAL FIELD

This application relates to the field of computer technologies, and in particular, to a method, an apparatus, and a circuit for compensating a neural network based on a computing-in-memory circuit.

## BACKGROUND

In recent years, a neural network technology develops rapidly and is widely applied to speech recognition, image recognition, natural language processing, an expert system, and the like. Core computation of a neural network is a multiply-accumulate operation of a matrix vector. The multiply-accumulate operation has computing-intensive and memory-intensive characteristics. Therefore, to improve computing efficiency of the neural network, a dedicated accelerator needs to be customized for the neural network.

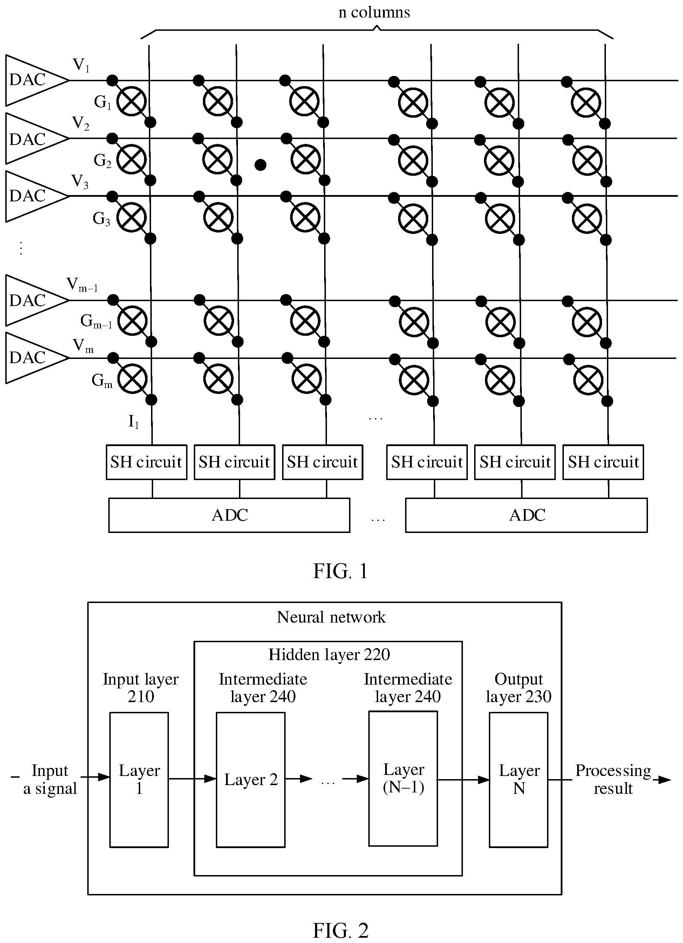

In-memory computing (which may also be referred to as in-memory computation) is an efficient solution designed by a neural network accelerator. A computing-in-memory architecture not only retains storage and read/write functions of a storage circuit, but also efficiently supports the multiply-accumulate operation, thereby effectively reducing data migration and improving system energy efficiency. FIG. 1 is a diagram of a structure of a multiply-accumulate array in a computing-in-memory circuit. The multiply-accumulate array (where m rows and n columns are used as an example) is constructed by analog devices. Each row of the multiply-accumulate array is connected to one digital to analog converter (digital to analog converter, DAC), each column of the multiply-accumulate array is connected to one shift hold (shift hold, SH) circuit, and SH circuits in a plurality of columns may be connected to one analog to digital converter (analog to digital converter, ADC). Specifically, during neural network computation, weight data of the neural network is pre-written in a form of conductance (G) into memory cells (cells) of the computation array, and input data is represented in a form of voltage (V) after being converted by DACs correspondingly connected to a plurality of rows. Therefore, a sum of currents (I) obtained through convergence in a same column represents a multiply-accumulate result of the input data and the weight data. For example, a first column is used as an example. Conductance corresponding to m rows is represented as $G_1$ to $G_m$, input data converted by DACs is represented as $V_1$ to $V_m$, and a sum of currents in the first column is expressed as:

$$I_1 = V_1 \times G_1 + V_2 \times G_2 + ... + V_m \times G_m.$$

The foregoing computing-in-memory circuit has great advantages in a computation speed and power consumption, but analog computation may cause various errors or noise, for example, conversion errors of the ADC and the DAC, a programming error of the memory cell, an error of the SH circuit, wire resistance, and circuit noise. These errors reduce precision of multiply-accumulate and affect an end-to-end effect of the neural network.

## SUMMARY

This application provides a method, an apparatus, and a circuit for compensating a neural network based on a computing-in-memory circuit, to compensate for a computation error generated when the computing-in-memory circuit performs neural network computation. Therefore, precision of multiply-accumulate is improved and an end-to-end effect of the neural network is ensured.

To achieve the foregoing objective, this application uses the following technical solutions.

According to a first aspect, a method for compensating a neural network based on a computing-in-memory circuit is provided, where the neural network includes a plurality of multiply-accumulate layers. The method includes: obtaining configuration information, where the configuration information indicates at least one to-be-compensated multiply-accumulate layer in the plurality of multiply-accumulate layers and at least one compensation circuit corresponding to the at least one multiply-accumulate layer, and the at least one compensation circuit is configured to compensate for a computation error of the at least one multiply-accumulate layer; and compensating, in a process in which the computing-in-memory circuit runs the neural network, a computation result of the at least one multiply-accumulate layer through the at least one compensation circuit indicated by the configuration information.

In the foregoing technical solutions, when the configuration information is obtained, the at least one to-be-compensated multiply-accumulate layer and the at least one compensation circuit configured to compensate the at least one multiply-accumulate layer may be determined based on the configuration information. In this way, when the computing-in-memory circuit subsequently runs the neural network, the computation result of the at least one multiply-accumulate layer can be compensated through the at least one compensation circuit indicated by the configuration information. Therefore, precision of multiply-accumulate is improved and an end-to-end effect of the neural network is ensured.

In a possible implementation of the first aspect, for each of the at least one multiply-accumulate layer, the computing-in-memory circuit includes a plurality of first storage rows for running the multiply-accumulate layer, a compensation circuit corresponding to the multiply-accumulate layer includes at least one second storage row, and the at least one second storage row and the plurality of first storage rows share a plurality of storage columns. In the foregoing possible implementation, the at least one second storage row may be used to compensate the multiply-accumulate layer in analog domain, and the at least one second storage row and the plurality of first storage rows share the plurality of storage columns. Therefore, a sum of currents obtained through convergence in each storage column is compensated output data corresponding to the storage column. A manner of performing compensation in analog domain has advantages of not increasing computation overheads and having a small range truncation problem.

In a possible implementation of the first aspect, the at least one second storage row is used to store a compensation weight set corresponding to the multiply-accumulate layer, and the compensation weight set is obtained based on a compensation data set corresponding to the multiply-accumulate layer. For example, the compensation weight set is obtained based on the compensation data set corresponding to the multiply-accumulate layer and a fixed value, the corresponding compensation weight set is pre-stored in the at least one second storage row, the plurality of first storage rows may be used to receive an input data set, and the at least one second storage row may be used to receive the fixed value. Therefore, currents obtained through convergence in the plurality of storage columns are a compensated output data set corresponding to the multiply-accumulate layer.

In a possible implementation of the first aspect, for each of the at least one multiply-accumulate layer, the computing-in-memory circuit includes the plurality of first storage rows for running the multiply-accumulate layer, the compensation circuit corresponding to the multiply-accumulate layer includes a plurality of registers configured to store the compensation data set, and the plurality of registers are in a one-to-one correspondence with the plurality of storage columns corresponding to the plurality of first storage rows. In the foregoing possible implementation, the plurality of registers may be configured to compensate for a computation error of the corresponding multiply-accumulate layer in digital domain, and each register may be configured to store one column of compensation data in a plurality of columns of compensation data. In this way, when multiply-accumulate corresponding to the multiply-accumulate layer is performed subsequently, a corresponding weight data set is pre-stored in memory cells of the plurality of first storage rows occupied by the multiply-accumulate layer, the compensation data set is pre-stored in the plurality of registers, the plurality of first storage rows may be used to receive the input data set, the currents obtained through convergence in the plurality of storage columns are an initial output data set that has a computation error and that corresponds to the multiply-accumulate layer, and after the initial output data set is converted by an ADC, the plurality of columns of compensation data in the plurality of registers are used, in digital domain, to separately compensate each column of output data in the initial output data set, to obtain the compensated output data set.

In a possible implementation of the first aspect, the configuration information further indicates a compensation data set corresponding to each of the at least one compensation circuit. In the foregoing possible implementation, the configuration information may include the compensation data set corresponding to each compensation circuit, so that the computing-in-memory circuit can obtain, from the configuration information, the compensation data set corresponding to each compensation circuit.

In a possible implementation of the first aspect, the method includes: obtaining a calibration data set, where the calibration data set is used to determine a computation error generated when the computing-in-memory circuit runs the neural network; obtaining, in a process in which the computing-in-memory circuit runs the neural network based on the calibration data set, a first output data set of a first multiply-accumulate layer in the at least one multiply-accumulate layer; and determining a first compensation data set based on the first output data set, where the first compensation data set is used to compensate for a computation error of the first multiply-accumulate layer. In the foregoing possible implementation, when performing neural network computation based on the calibration data set, the computing-in-memory circuit may obtain the output data set of the first multiply-accumulate layer in the neural network in a computation process, determine the corresponding compensation data set based on the output data set of the first multiply-accumulate layer, and write the corresponding compensation data set into the computing-in-memory circuit. In this way, when the computing-in-memory circuit performs neural network computation subsequently, the compensation data set corresponding to the first multiply-accumulate layer can be used to compensate for the computation error of the first multiply-accumulate layer. Therefore, the precision of the multiply-accumulate is improved and the end-to-end effect of the neural network is ensured.

In a possible implementation of the first aspect, the calibration data set includes a first input data set of the first multiply-accumulate layer, and the first output data set is generated by the computing-in-memory circuit by running the first multiply-accumulate layer based on the first input data set. In the foregoing possible implementation, a simple and effective manner of determining the first compensation data set is provided. The first compensation data set includes only the computation error of the first multiply-accumulate layer, so that a computation amount for determining the first compensation data set can be reduced.

In a possible implementation of the first aspect, the method further includes: obtaining a second output data set of a second multiply-accumulate layer in the at least one multiply-accumulate layer, where the second multiply-accumulate layer is a multiply-accumulate layer at a lower layer of the first multiply-accumulate layer; and determining a second compensation data set based on the second output data set, where the second compensation data set is used to compensate for a computation error of the second multiply-accumulate layer. In the foregoing possible implementation, a manner of determining at least two compensation data sets corresponding to at least two multiply-accumulate layers is provided. When performing neural network computation subsequently, the computing-in-memory circuit may separately compensate for computation errors of the at least two multiply-accumulate layers by using the at least two compensation data sets. Therefore, the precision of the multiply-accumulate is improved and the end-to-end effect of the neural network is ensured.

In a possible implementation of the first aspect, the calibration data set further includes a second input data set of the second multiply-accumulate layer, and the second output data set is generated by the computing-in-memory circuit by running the second multiply-accumulate layer based on the second input data set. In the foregoing possible implementation, a simple and effective manner of determining the second compensation data set is provided. The second compensation data set includes only the computation error of the second multiply-accumulate layer, so that a computation amount for determining the second compensation data set can be reduced.

In a possible implementation of the first aspect, the second output data set is generated by the computing-in-memory circuit by running the first multiply-accumulate layer to the second multiply-accumulate layer based on the first input data set. In the foregoing possible implementation, a simple and effective manner of determining the second output data set is provided. The second compensation data set includes the computation error of the second multiply-accumulate layer and a computation error of a previous layer. Therefore, when the computation error of the second multiply-accumulate layer is compensated using the second compensation data set, the precision of the multiply-accumulate can be further improved and the end-to-end effect of the neural network can be further ensured.

In a possible implementation of the first aspect, the calibration data set includes a third input data set of a third multiply-accumulate layer, the third multiply-accumulate layer is a multiply-accumulate layer at an upper layer of the first multiply-accumulate layer, and the first output data set is generated by the computing-in-memory circuit by running the third multiply-accumulate layer to the first multiply-accumulate layer based on the third input data set. In the foregoing possible implementation, a simple and effective manner of determining the first output data set is provided, and the correspondingly determined first compensation data set includes the computation error of the first multiply-accumulate layer and a computation error of a previous layer. Therefore, when the computation error of the first multiply-accumulate layer is compensated using the first compensation data set, the precision of the multiply-accumulate can be further improved and the end-to-end effect of the neural network can be further ensured.

In a possible implementation of the first aspect, the compensation data set includes one of the following: a column offset average value set, a quadratic correction function set, and a linear correction function set. In the foregoing possible implementation, diversity and flexibility of the compensation data set can be improved.

According to a second aspect, a computing-in-memory circuit is provided, where the computing-in-memory circuit is configured to run a neural network. The computing-in-memory circuit includes at least one multiply-accumulate array corresponding to at least one multiply-accumulate layer in the neural network, each multiply-accumulate array includes H storage rows, one first signal line is shared in each of the H storage rows, the H storage rows correspond to n storage columns and one second signal line is shared in each storage column, and H and n are positive integers greater than 1. For a multiply-accumulate array corresponding to any multiply-accumulate layer, m storage rows in the H storage rows are used to store a weight data set of the multiply-accumulate layer, where m is a positive integer less than H; first signal lines corresponding to the m storage rows are configured to receive an input data set of the multiply-accumulate layer; at least one of (H-m) storage rows in the H storage rows is used to store a compensation weight set of the multiply-accumulate layer; a first signal line corresponding to the at least one of (H-m) storage rows is configured to receive preset input data, where the preset input data and the compensation weight set are used to determine a compensation data set of the multiply-accumulate layer; and second signal lines corresponding to the n storage columns are configured to output a computation result of the multiply-accumulate layer.

In the foregoing technical solutions, the multiply-accumulate array includes the H storage rows, the m storage rows in the H storage rows may be used to store the weight data set of the multiply-accumulate layer, the first signal lines corresponding to the m storage rows may be configured to receive the input data set of the multiply-accumulate layer, the at least one of (H-m) storage rows may be configured to store the compensation weight set of the multiply-accumulate layer, and the first signal line corresponding to the at least one of (H-m) storage rows may be configured to receive the preset input data. In other words, the m storage rows may be used to perform multiply-accumulate at a multiply-accumulate layer corresponding to the computing-in-memory circuit, at least one storage row may be used to compensate for a computation result of the multiply-accumulate, and outputs of the second signal lines corresponding to the n storage columns are a computation result obtained by compensating for a computation error of the multiply-accumulate layer. In this way, when the multiply-accumulate layer is executed, the multiply-accumulate array can compensate for the computation error through the at least one of (H-m) storage rows. Therefore, precision of the multiply-accumulate is improved, an end-to-end effect of the neural network is ensured, and an increase in a computation amount due to compensation is avoided.

In a possible implementation of the second aspect, the m storage rows are of a same type as the (H-m) storage rows. For example, types of the m storage rows and the (H-m) storage rows are input rows, and/or the m storage rows are adjacent to the (H-m) storage rows.

According to a third aspect, an apparatus for compensating a neural network based on a computing-in-memory circuit is provided, where the neural network includes a plurality of multiply-accumulate layers. The apparatus includes: an obtaining unit, configured to obtain configuration information, where the configuration information indicates at least one to-be-compensated multiply-accumulate layer in the plurality of multiply-accumulate layers and at least one compensation circuit corresponding to the at least one multiply-accumulate layer, and the at least one compensation circuit is configured to compensate for a computation error of the at least one multiply-accumulate layer; and a compensation unit, configured to compensate, in a process in which the computing-in-memory circuit runs the neural network, a computation result of the at least one multiply-accumulate layer through the at least one compensation circuit indicated by the configuration information.

In a possible implementation of the third aspect, for each of the at least one multiply-accumulate layer, the computing-in-memory circuit includes a plurality of first storage rows for running the multiply-accumulate layer, a compensation circuit corresponding to the multiply-accumulate layer includes at least one second storage row, and the at least one second storage row and the plurality of first storage rows share a plurality of storage columns.

In a possible implementation of the third aspect, the at least one second storage row is used to store a compensation weight set corresponding to the multiply-accumulate layer, and the compensation weight set is obtained based on a compensation data set corresponding to the multiply-accumulate layer.

In a possible implementation of the third aspect, for each of the at least one multiply-accumulate layer, the computing-in-memory circuit includes the plurality of first storage rows for running the multiply-accumulate layer, the compensation circuit corresponding to the multiply-accumulate layer includes a plurality of registers configured to store the compensation data set, and the plurality of registers are in a one-to-one correspondence with the plurality of storage columns corresponding to the plurality of first storage rows.

In a possible implementation of the third aspect, the configuration information further indicates a compensation data set corresponding to each of the at least one compensation circuit.

In a possible implementation of the third aspect, the apparatus further includes an obtaining unit. The obtaining unit is configured to obtain a calibration data set, where the calibration data set is used to determine a computation error generated when the computing-in-memory circuit runs the neural network. The obtaining unit is further configured to obtain, in a process in which the computing-in-memory circuit runs the neural network based on the calibration data set, a first output data set of a first multiply-accumulate layer in the at least one multiply-accumulate layer. The determining unit is further configured to determine a first compensation data set based on the first output data set, where the first compensation data set is used to compensate for a computation error of the first multiply-accumulate layer.

In a possible implementation of the third aspect, the calibration data set includes a first input data set of the first multiply-accumulate layer, and the first output data set is generated by the computing-in-memory circuit by running the first multiply-accumulate layer based on the first input data set.

In a possible implementation of the third aspect, the obtaining unit is further configured to obtain a second output data set of a second multiply-accumulate layer in the at least one multiply-accumulate layer, where the second multiply-accumulate layer is a multiply-accumulate layer at a lower layer of the first multiply-accumulate layer; and the determining unit is further configured to determine a second compensation data set based on the second output data set, where the second compensation data set is used to compensate for a computation error of the second multiply-accumulate layer.

In a possible implementation of the third aspect, the calibration data set further includes a second input data set of the second multiply-accumulate layer, and the second output data set is generated by the computing-in-memory circuit by running the second multiply-accumulate layer based on the second input data set.

In a possible implementation of the third aspect, the second output data set is generated by the computing-in-memory circuit by running the first multiply-accumulate layer to the second multiply-accumulate layer based on the first input data set.

In a possible implementation of the third aspect, the calibration data set includes a third input data set of a third multiply-accumulate layer, the third multiply-accumulate layer is a multiply-accumulate layer at an upper layer of the first multiply-accumulate layer, and the first output data set is generated by the computing-in-memory circuit by running the third multiply-accumulate layer to the first multiply-accumulate layer based on the third input data set.

In a possible implementation of the third aspect, the compensation data set includes one of the following: a column offset average value set, a quadratic correction function set, and a linear correction function set.

According to another aspect of this application, a computer-readable storage medium is provided. The computer-readable storage medium stores a computer program or instructions. When the computer program or the instructions are run, the method for compensating a neural network based on a computing-in-memory circuit according to any one of the first aspect or the possible implementations of the first aspect is implemented.

According to still another aspect of this application, a computer program product is provided. When the computer program product runs on a computer, the computer is enabled to perform the method for compensating a neural network based on a computing-in-memory circuit according to any one of the first aspect or the possible implementations of the first aspect.

It may be understood that any apparatus, computer storage medium, or computer program product provided above is configured to perform the corresponding method provided above. Therefore, for beneficial effects that can be achieved by the apparatus, computer storage medium, or computer program product, refer to beneficial effects in the corresponding method provided above. Details are not described herein again.

**BRIEF DESCRIPTION OF DRAWINGS**

FIG. 1 is a diagram of a structure of a storage array;

FIG. 2 is a diagram of a structure of a neural network according to an embodiment of this application;

FIG. 3 is a diagram of a structure of a computing-in-memory circuit according to an embodiment of this application;

FIG. 4 is a schematic flowchart of a method for compensating a neural network according to an embodiment of this application;

FIG. 5 is a diagram of a structure of a neural network LeNet-5 according to an embodiment of this application;

FIG. 6A is a diagram of a structure of another computing-in-memory circuit according to an embodiment of this application;

FIG. 6B is a diagram of a structure of still another computing-in-memory circuit according to an embodiment of this application;

FIG. 7 is a schematic flowchart of another method for compensating a neural network according to an embodiment of this application;

FIG. 8 is a comparison diagram of compensating for a computation error of a neural network according to an embodiment of this application;

FIG. 9 is a schematic flowchart of still another method for compensating a neural network according to an embodiment of this application;

FIG. 10 is a schematic flowchart of still yet another method for compensating a neural network according to an embodiment of this application;

FIG. 11 is another comparison diagram of compensating for a computation error of a neural network according to an embodiment of this application;

FIG. 12 is a schematic flowchart of still another method for compensating a neural network according to an embodiment of this application;

FIG. 13 is a diagram of determining a compensation neural set according to an embodiment of this application;

FIG. 14 is a diagram of a structure of an apparatus for compensating a neural network according to an embodiment of this application; and

FIG. 15 is a diagram of a structure of another apparatus for compensating a neural network according to an embodiment of this application.

**DESCRIPTION OF EMBODIMENTS**

In this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural.

In embodiments of this application, words such as "first" and "second" are used to distinguish between objects with similar names, functions, or effects. A person skilled in the art may understand that the words such as "first" and "second" do not limit a quantity or an execution sequence. In addition, words such as "example" or "for example" in this application are used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

Before embodiments of this application are described, related content such as a neural network and a computing-in-memory circuit in this application is first introduced and described.

The neural network may include neurons, and the neuron may be an operation unit that uses $x_s$ and an intercept of 1 as inputs. An output of the operation unit satisfies the following formula (1).

$$h_{W,b}\left(x\right) = f\left(W^T x\right) = f(\sum_{s=1}^{n} W_s x_s + b) \quad (1),$$

where

s=1, 2, ..., or n, n is a natural number greater than 1, $W_s$ is a weight of $x_s$, and b is a bias of the neuron. $f$ is an activation function (activation function) of the neuron, and is used to introduce a non-linear characteristic into the neural network, to convert an input signal in the neuron into an output signal. An output signal of the activation function may be used as an input of a next layer, and the activation function may be a hyperbolic tangent function (tanh), an S-shaped function (sigmoid), or the like. The neural network is a network formed by connecting a plurality of single neurons, that is, an output of one neuron may be an input of another neuron. An input of each neuron may be connected to a local receptive field of a previous layer, to extract a feature of the local receptive field, and the local receptive field may be a region including several neurons. A weight represents strength of a connection between different neurons. The weight determines influence of an input on an output.

FIG. 2 is a diagram of a structure of a neural network according to an embodiment of this application. The neural network includes N processing layers, which are represented as a layer 1 to a layer N, and N is an integer greater than or equal to 3. The layer 1 of the neural network is an input layer 210, and is responsible for receiving an input signal. A last layer of the neural network is an output layer 230, and is responsible for outputting a processing result of the neural network. Layers except the layer 1 and the last layer are intermediate layers 240, these intermediate layers 240 together form a hidden layer 220, and each intermediate layer 240 in the hidden layer 220 may receive an input signal and output a signal. The hidden layer 220 is responsible for processing the input signal. Each layer represents a logical level of signal processing. Through a plurality of layers, a data signal may be processed by a plurality of levels of logic. An input signal of the neural network may be a signal in various forms, such as a video signal, a voice signal, a text signal, an image signal, or a temperature signal. During actual application, the input signal of the neural network further includes other engineering signals that can be processed by various computers, which are not listed herein one by one.

In some feasible embodiments, the N processing layers of the neural network may include a fully connected layer. The fully connected layer may indicate that each neuron at an $i^{th}$ layer is connected to all neurons at an $(i+1)^{th}$ layer, and a value of i is a positive integer less than N. In another feasible embodiment, the N processing layers of the neural network may include a convolutional layer and a pooling layer. The convolutional layer is a neuron layer that is in a convolutional neural network and that performs convolution processing on the input signal. In the convolutional layer, one neuron at the $i^{th}$ layer may be connected to a part of neurons at the $(i+1)^{th}$ layer.

In this embodiment of this application, the fully connected layer and the convolutional layer that are in the neural network may be collectively referred to as a multiply-accumulate layer. The multiply-accumulate layer may be configured to perform a matrix multiplication operation on an input matrix (which may also be referred to as input data or an input data set) corresponding to the layer and a corresponding weight matrix (which may also be referred to as weight data or a weight data set) (that is, accumulate products of corresponding elements in the two matrices), to obtain an output matrix (which may also be referred to as output data or an output data set) corresponding to the layer. The multiply-accumulate layer in the neural network has computing-intensive and memory-intensive characteristics. To improve computing efficiency of the neural network, a dedicated accelerator, which may also be referred to as a neural network accelerator, usually needs to be customized for the neural network.

In-memory computing (which may also be referred to as in-memory computation) is an efficient solution designed by the neural network accelerator. A computing-in-memory architecture not only retains storage and read/write functions of a storage circuit, but also efficiently supports a multiply-accumulate operation, thereby effectively reducing data migration and improving system energy efficiency.

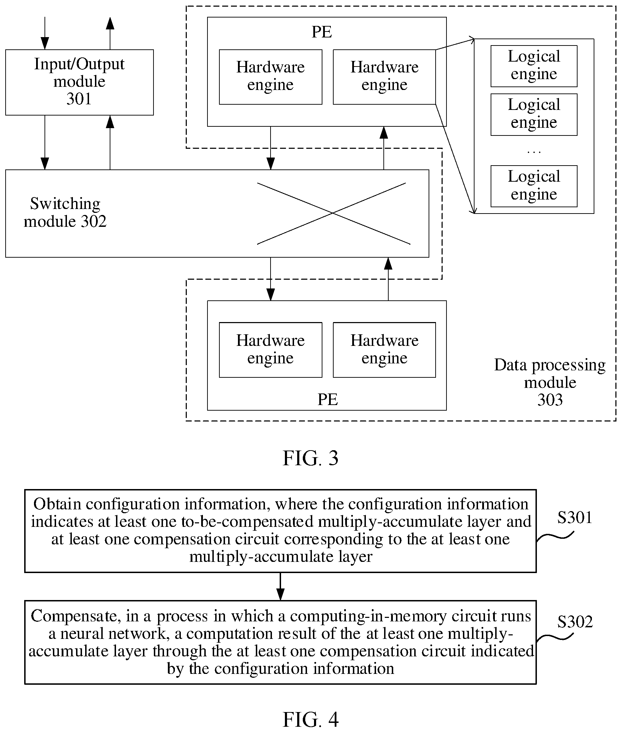

FIG. 3 is a diagram of a structure of a computing-in-memory circuit according to an embodiment of this application. The computing-in-memory circuit includes an input/output module 301, a switching module 302, and a data processing module 303. The data processing module 303 may include a plurality of physical engines (physical engines, PEs). In FIG. 3, an example in which the data processing module 303 includes two PEs is used for description. The input/output module 301 may be configured to receive data from the outside, and output data to the outside. The switching module 302 may be configured to perform data exchange between the input/output module 301 and the data processing module 303, and between different PEs in the data processing module 303. The data processing module 303 may be configured to run a neural network, to perform related computation in the neural network. For example, a part of PEs in the data processing module 303 may be configured to complete multiply-accumulate in the neural network, and the other part of PEs may be configured to complete other computation such as activation, dot product, dot addition, and division in the neural network. Alternatively, one PE may perform both multiply-accumulate and other computation such as activation, dot product, dot addition, and division. Optionally, each PE may include one or more hardware engines (hardware engines), and each hardware engine may include a plurality of logical engines (logical engines).

In some possible embodiments, each PE configured to perform multiply-accumulate in a plurality of PEs may include several multiply-accumulate arrays (cross bars) (which may also be referred to as computation arrays or storage arrays), each multiply-accumulate array may include a plurality of rows and a plurality of columns of memory cells (which may also be referred to as computation memory cells), memory cells located in a same row may share one first signal line, memory cells located in a same column may share one second signal line, the first signal line may be a source line (source line), and the second signal line may be a bit line (bit line). Further, each multiply-accumulate array may further include a plurality of digital-to-analog converters (digital to analog converters, DACs), a plurality of shift hold (shift hold, SH) circuits, and a plurality of analog-to-digital converters (analog to digital converters, ADCs). Each row in the multiply-accumulate array may be connected to one DAC, each column may be connected to one SH circuit, and SH circuits in a plurality of columns may be connected to one ADC.

Optionally, the multiply-accumulate array may be implemented using a plurality of different types of analog devices, such as a resistive random-access memory (resistive random-access memory, ReRAM) array, a NOR non-volatile flash memory (NorFlash), an analog memristor array, and an analog phase-change memory array. When the computing-in-memory circuit is used for neural network computation, weight data corresponding to the neural network may be pre-stored in a form of conductance (G) in memory cells, and input data is represented in a form of voltage (V) after being converted by DACs correspondingly connected to a plurality of rows. In this way, a sum of currents (I) obtained through convergence on memory cells in a same column represents a result of a multiply-accumulate operation on the input data and the weight data, and the sum of currents enters digital domain after being processed and converted by a corresponding SH circuit and a corresponding ADC. Optionally, in addition, a plurality of pieces of data may be input in parallel in a row direction in the multiply-accumulate array, and a plurality of multiply-accumulate operations may be performed in parallel in a column direction in the multiply-accumulate array.

When the computing-in-memory circuit is used for the neural network computation, the computing-in-memory circuit has great advantages in a computation speed and power consumption. However, the foregoing multiply-accumulate is performed in analog domain, and analog computation introduces various errors or noise, such as conversion errors of the ADC and the DAC, a programming error of the memory cell, an error of the SH circuit, wire resistance, and circuit noise. These errors reduce precision of the multiply-accumulate, thereby affecting an end-to-end effect of the neural network.

Based on this, an embodiment of this application provides a method for compensating a neural network based on a computing-in-memory circuit. The method may be used to determine and compensate for, after training of the neural network is completed and weight data corresponding to each multiply-accumulate layer in the neural network is obtained, a computation error generated when the computing-in-memory circuit performs neural network computation. Therefore, precision of multiply-accumulate is improved and an end-to-end effect of the neural network is ensured. Specific content of the technical solutions provided in this application is explained below.

FIG. 4 is a schematic flowchart of a method for compensating a neural network based on a computing-in-memory circuit according to an embodiment of this application. The method is applicable to an electronic device with a computing function. For example, the electronic device may be a server or a computing-in-memory circuit. The neural network includes a plurality of multiply-accumulate layers. The method includes the following steps.

S301: Obtain configuration information, where the configuration information indicates at least one to-be-compensated multiply-accumulate layer and at least one compensation circuit corresponding to the at least one multiply-accumulate layer, and the at least one compensation circuit is configured to compensate for a computation error of the at least one multiply-accumulate layer.

In a possible embodiment, the configuration information may be generated by a server. After generating the configuration information, the server may configure the configuration information in the computing-in-memory circuit. In this way, the computing-in-memory circuit can subsequently obtain the configuration information, and compensate, when running the neural network, the neural network by using the configuration information. Optionally, that the server generates the configuration information may include the following steps: S3011 to S3013.

S3011: Determine the at least one to-be-compensated multiply-accumulate layer in the plurality of multiply-accumulate layers.

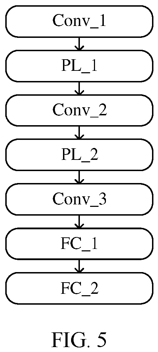

The neural network is a neural network that has completed training, and the neural network may include the plurality of multiply-accumulate layers. After the training of the neural network is completed, weight data corresponding to each of the plurality of multiply-accumulate layers is obtained. Each of the plurality of multiply-accumulate layers may be a convolutional layer, or may be a fully connected layer. For example, FIG. 5 is a diagram of a neural network LeNet-5. The neural network LeNet-5 includes: a first convolutional layer Conv_1, a first pooling layer PL_1, a second convolutional layer Conv_2, a second pooling layer PL_2, a third convolutional layer Conv_3, a first fully connected layer FC_1, and a second fully connected layer FC_2. A plurality of multiply-accumulate layers included in the neural network LeNet-5 may be Conv_1, Conv_2, Conv_3, FC_1, and FC_2.

In addition, the at least one multiply-accumulate layer may include one or more multiply-accumulate layers. The at least one multiply-accumulate layer may be a part of the plurality of multiply-accumulate layers included in the neural network, or may be all of the plurality of multiply-accumulate layers included in the neural network. For example, the neural network LeNet-5 shown in FIG. 5 is used as an example. The at least one multiply-accumulate layer may include FC_2, the at least one multiply-accumulate layer may include Conv_1 and Conv_3, or the at least one multiply-accumulate layer may include Conv_1, Conv_2, Conv_3, FC_1, and FC_2.

Specifically, the server may determine the at least one to-be-compensated multiply-accumulate layer in the plurality of multiply-accumulate layers in the following manners. Manner 1: A user may input indication information to the electronic device based on an actual requirement, where the indication information may indicate the at least one multiply-accumulate layer, and therefore, the electronic device may determine the at least one multiply-accumulate layer based on the indication information. Manner 2: The electronic device may select the at least one to-be-compensated multiply-accumulate layer from the plurality of multiply-accumulate layers based on a preset rule or algorithm. For example, for the manner 2, when the at least one multiply-accumulate layer includes one multiply-accumulate layer, the to-be-compensated multiply-accumulate layer may be a last multiply-accumulate layer in the plurality of multiply-accumulate layers.

S3012: Determine the at least one compensation circuit that is in the computing-in-memory circuit and that is configured to compensate for the computation error of the at least one multiply-accumulate layer.

Each of the at least one multiply-accumulate layer may occupy a plurality of first storage rows in the computing-in-memory circuit. Memory cells in the plurality of first storage rows may be configured to store a weight data set corresponding to the multiply-accumulate layer. The plurality of first storage rows may be further used to receive an input data set corresponding to the multiply-accumulate layer, and perform multiply-accumulate on the input data set and the weight data set.

In addition, the at least one compensation circuit may be in a one-to-one correspondence with the at least one multiply-accumulate layer. The at least one compensation circuit may be configured to compensate for the computation error of the at least one multiply-accumulate layer in analog domain, may be configured to compensate for the computation error of the at least one multiply-accumulate layer in digital domain, or may be configured to compensate for the computation error of the at least one multiply-accumulate layer in both analog domain and digital domain.

In a possible embodiment, for any one of the at least one compensation circuit, when the compensation circuit is configured to compensate for a computation error of a corresponding multiply-accumulate layer in analog domain, the compensation circuit may include at least one second storage row. The at least one second storage row and a plurality of first storage rows occupied by the multiply-accumulate layer corresponding to the compensation circuit share a plurality of storage columns, so that determining the compensation circuit is determining the at least one second storage row. The at least one second storage row may be used to store a compensation weight set of the corresponding multiply-accumulate layer, the compensation weight set is obtained based on a compensation data set corresponding to the multiply-accumulate layer and a fixed value, the compensation data set may include at least one row, each of the at least one row includes a plurality of columns of compensation data, and the plurality of pieces of compensation data are in a one-to-one correspondence with the plurality of storage columns. In this way, when multiply-accumulate corresponding to the multiply-accumulate layer is subsequently performed, a corresponding weight data set is pre-stored in memory cells of the plurality of first storage rows occupied by the multiply-accumulate layer, the corresponding compensation weight set is pre-stored in the at least one second storage row, the plurality of first storage rows may be used to receive an input data set, and the at least one second storage row may be used to receive the fixed value. Therefore, currents obtained through convergence in the plurality of storage columns are a compensated output data set corresponding to the multiply-accumulate layer.

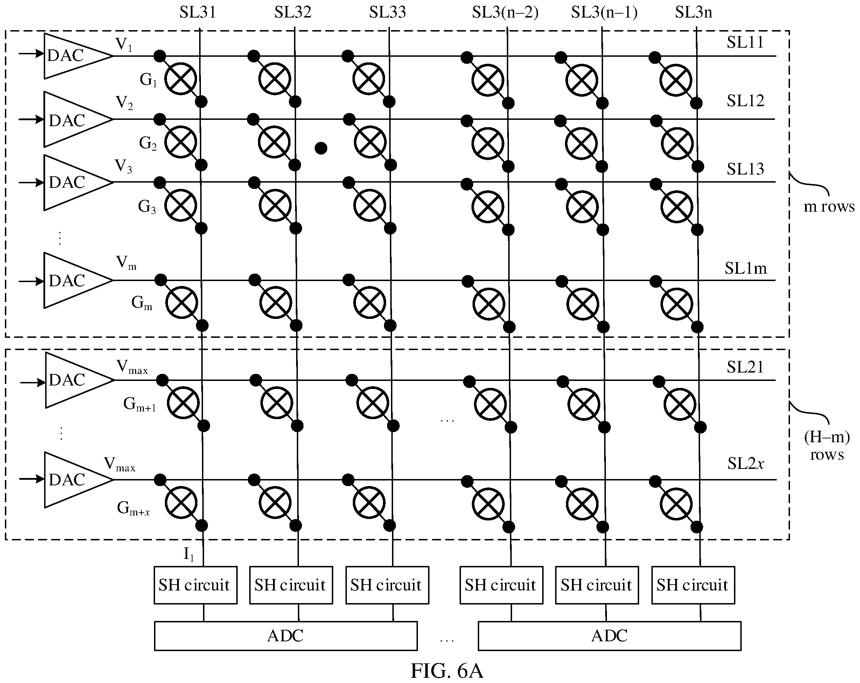

For example, as shown in FIG. 6A, it is assumed that the multiply-accumulate array configured to perform multiply-accumulate includes H storage rows (which may also be referred to as input storage rows or input rows), a to-be-compensated multiply-accumulate layer occupies m storage rows in the H storage rows, a corresponding compensation circuit occupies at least one of (H-m) (where (H-m) is represented as x) storage rows, and the H storage rows correspond to n storage columns (which may also be referred to as output storage columns or output columns). In the figure, an example in which the compensation circuit occupies the (H-m) storage rows is used for description. Memory cells in the m storage rows may be configured to store the weight data set of the multiply-accumulate layer. For example, m memory cells located in a first storage column may be configured to store weight data $G_1$ to $G_m$ respectively. The m storage rows correspond to m signal lines SL11 to SL1m and may be used to receive the input data set corresponding to the multiply-accumulate layer. For example, correspondingly received input data converted by DACs may be $V_1$ to $V_m$. $x$ second storage rows may be used to store the compensation weight set. For example, $x$ memory cells located in the first storage column may be configured to store $G_{m+1}$ to $G_{m+x}$ respectively. The $x$ storage rows correspond to $x$ signal lines SL21 to SL2x and may be used to receive the fixed value, and the fixed value may be an acceptable maximum voltage $V_{max}$ after being converted by DACs. Therefore, compensation data corresponding to the first storage column may be $V_{max} \times G_{m+1}+...+V_{max} \times G_{m+x}$. Output data that corresponds to the first storage column and that is in the finally obtained output data set is expressed as: $I_1=V_1 \times G_1+... +V_m \times G_m+V_{max} \times G_{m+1}+...+V_{max} \times G_{m+x}$.

Optionally, the m storage rows may be of a same type as the (H-m) storage rows. For example, types of the m storage rows and the (H-m) storage rows may be input storage rows (or referred to as input rows). That is, input data of each storage row may be variable. The m storage rows and the (H-m) storage rows may be adjacent. For example, the (H-m) storage rows may be adjacent to and located below the m storage rows. In addition, the *x* storage rows may be consecutive or inconsecutive in the H storage rows. This is not specifically limited in embodiments of this application.

In addition, when a compensation data set corresponding to one multiply-accumulate layer can be compensated using a single storage row, the at least one of (H-m) storage rows may include one storage row. Alternatively, when a compensation data set corresponding to one multiply-accumulate layer cannot be compensated using a single storage row, but can be compensated using a plurality of storage rows, the at least one of (H-m) storage rows may include the plurality of storage rows.

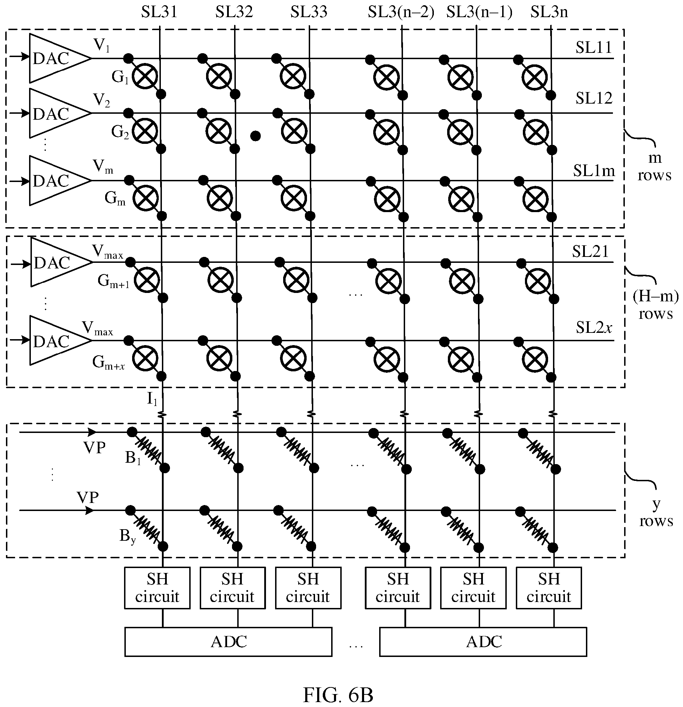

Further, with reference to FIG. 6A, as shown in FIG. 6B, in addition to the H storage rows, the multiply-accumulate array may further include y bias rows, the y bias rows are used to store a bias data set corresponding to the multiply-accumulate layer, the y bias rows are usually of a different type from the H storage rows, and input data of the y bias rows is fixed.

Rows and columns in the foregoing multiply-accumulate array are interchangeable. For example, alternatively, the n storage columns may be set to a row direction, and the H storage rows and the y bias rows may be set to a column direction. Directions of the rows and columns shown in FIG. 6A and FIG. 6B are merely examples, and constitute no limitation on embodiments of this application.

In another possible embodiment, for any one of the at least one compensation circuit, when the compensation circuit is configured to compensate for a computation error of a corresponding multiply-accumulate layer in digital domain, the compensation circuit may include a plurality of registers (where the register may be a memory cell in digital domain), so that determining the compensation circuit is determining the plurality of registers. The plurality of registers are configured to store a compensation data set, the compensation data set may include a plurality of columns of compensation data, the plurality of registers may be in a one-to-one correspondence with the plurality of storage columns, and each register may be configured to store one column of the plurality of columns of compensation data. In this way, when multiply-accumulate corresponding to the multiply-accumulate layer is performed subsequently, a corresponding weight data set is pre-stored in memory cells of a plurality of first storage rows occupied by the multiply-accumulate layer, the compensation data set is pre-stored in the plurality of registers, the plurality of first storage rows may be used to receive an input data set, currents obtained through convergence in a plurality of storage columns are an initial output data set that has a computation error and that corresponds to the multiply-accumulate layer, and after the initial output data set is converted by an ADC, the plurality of columns of compensation data in the plurality of registers are used, in digital domain, to separately compensate each column of output data in the initial output data set, to obtain a compensated output data set.

Optionally, the plurality of registers included in the foregoing compensation circuit may be reused. For example, a plurality of registers in which a bias data set corresponding to the multiply-accumulate layer is located may be reused. The bias data set may include a plurality of columns of bias data, and each of the plurality of registers may be configured to store one column of the plurality of columns of bias data.

In still another possible embodiment, for any one of the at least one compensation circuit, when the compensation circuit is configured to compensate for a computation error of a corresponding multiply-accumulate layer in both analog domain and digital domain, the compensation circuit may include at least one second storage row and a plurality of registers, the at least one second storage row may be configured to perform compensation in analog domain, and the plurality of registers may be configured to perform compensation in digital domain, so that determining the compensation circuit is determining the at least one second storage row and the plurality of registers. When the at least one compensation circuit is configured to compensate for the computation error of the at least one multiply-accumulate layer in both analog domain and digital domain, each of the at least one multiply-accumulate layer correspondingly has two compensation data sets, one compensation data set may be used to perform compensation in analog domain, and the other compensation data set may be used to perform compensation in digital domain. In addition, when performing compensation, each compensation circuit may first perform compensation in analog domain, and then perform compensation in digital domain. Detailed descriptions of performing compensation in analog domain and digital domain are consistent with descriptions in the foregoing two possible embodiments. Details are not described again in this embodiment of this application.

In the three possible embodiments provided above, a manner of performing compensation in analog domain has characteristics of not increasing computation overheads, having a small range truncation problem, and being prone to a compensation error, a manner of performing compensation in digital domain has characteristics of increasing computation overheads, having a large range truncation problem, and not being prone to a compensation error, and a manner of performing compensation in both analog domain and digital domain has characteristics of having a small range truncation problem and not being prone to a compensation error. In addition, the manner of performing compensation in analog domain further has characteristics of flexible compensation locations and large compensation space. When the compensation is performed in digital domain and the plurality of registers are reused, storage space can be saved and a running speed can be increased.

S3013: Generate the configuration information based on the at least one multiply-accumulate layer and the at least one compensation circuit, where the configuration information indicates the at least one multiply-accumulate layer and the at least one compensation circuit corresponding to the at least one multiply-accumulate layer.

The configuration information may include an identifier of each of the at least one multiply-accumulate layer and an identifier of a compensation circuit corresponding to each of the at least one multiply-accumulate layer. Optionally, the identifier of the multiply-accumulate layer may be a quantity of layers of the multiply-accumulate layer, address information of a storage array in which the multiply-accumulate layer is located, or address information of a plurality of first storage rows occupied by the multiply-accumulate layer. The identifier of the compensation circuit corresponding to each multiply-accumulate layer may be address information of at least one second storage row included in the compensation circuit and/or address information of a plurality of registers included in the compensation circuit.

In a possible embodiment, for any one of the at least one multiply-accumulate layer, if a compensation circuit corresponding to the multiply-accumulate layer is configured to compensate the multiply-accumulate layer in analog domain, the configuration information may include an identifier of the multiply-accumulate layer and address information of at least one second storage row included in the compensation circuit corresponding to the multiply-accumulate layer. Optionally, a fixed value that the at least one second storage row is used to receive may be a default value, that is, the default value may not be reflected in the configuration information, and/or a compensation weight set corresponding to the at least one second storage row may be directly written (which may also be referred to as programmed) into the at least one second storage row, that is, the compensation weight set may not be reflected in the configuration information. Certainly, the configuration information may alternatively include a fixed value received by the at least one second storage row when a computation error is compensated, and/or a compensation weight set corresponding to the at least one second storage row, that is, the fixed value and the compensation weight set may alternatively be reflected in the configuration information. The fixed value and the compensation weight set are not reflected in the configuration information, so that a size of the configuration information can be reduced, thereby reducing storage space occupied by the configuration information.

In another possible embodiment, for any one of the at least one multiply-accumulate layer, if a compensation circuit corresponding to the multiply-accumulate layer is configured to compensate the multiply-accumulate layer in digital domain, the configuration information may include an identifier of the multiply-accumulate layer and address information of a plurality of registers included in the compensation circuit corresponding to the multiply-accumulate layer. Optionally, when the plurality of registers are not reused registers, a compensation data set corresponding to the multiply-accumulate layer may be directly written into the plurality of registers, and the compensation data set may not be reflected in the configuration information. When the plurality of registers are reused registers in which a bias data set is located, a sum of the bias data set and the compensation data set may be written into the plurality of registers, and the compensation data set may not be reflected in the configuration information. When the plurality of registers are the reused registers in which the bias data set is located, the configuration information may further include the compensation data set corresponding to the multiply-accumulate layer, further indicate that compensation in digital domain is enabled, and write the bias data set into the plurality of registers. In this way, when multiply-accumulate corresponding to the multiply-accumulate layer is performed subsequently, the computation may be performed in digital domain based on the compensation data set in the configuration information and the bias data set in the plurality of registers, to implement the compensation.

In still another possible embodiment, for any one of the at least one multiply-accumulate layer, if a compensation circuit corresponding to the multiply-accumulate layer is configured to compensate the multiply-accumulate layer in analog domain and digital domain, the configuration information may include an identifier of the multiply-accumulate layer, address information of at least one second storage row included in the compensation circuit corresponding to the multiply-accumulate layer, and address information of a plurality of registers included in the compensation circuit corresponding to the multiply-accumulate layer. Detailed descriptions of the configuration information when compensation is performed in analog domain and digital domain are consistent with descriptions in the foregoing two possible embodiments. Details are not described again in this embodiment of this application.

Further, after the configuration information is generated, the configuration information may be configured in the computing-in-memory circuit. In this way, when the computing-in-memory circuit subsequently runs the neural network, the computing-in-memory circuit may obtain the configuration information, and compensate, based on the configuration information, a computation error generated when the computing-in-memory circuit performs neural network computation. Therefore, precision of multiply-accumulate is improved and an end-to-end effect of the neural network is ensured.

Correspondingly, after the configuration information is obtained, as shown in FIG. 4, the method further includes S302: Compensate, in a process in which the computing-in-memory circuit runs the neural network, a computation result of the at least one multiply-accumulate layer through the at least one compensation circuit indicated by the configuration information. For related descriptions of compensating the computation result of the at least one multiply-accumulate layer through the at least one compensation circuit, refer to the foregoing descriptions. Details are not described herein again in this embodiment of this application.

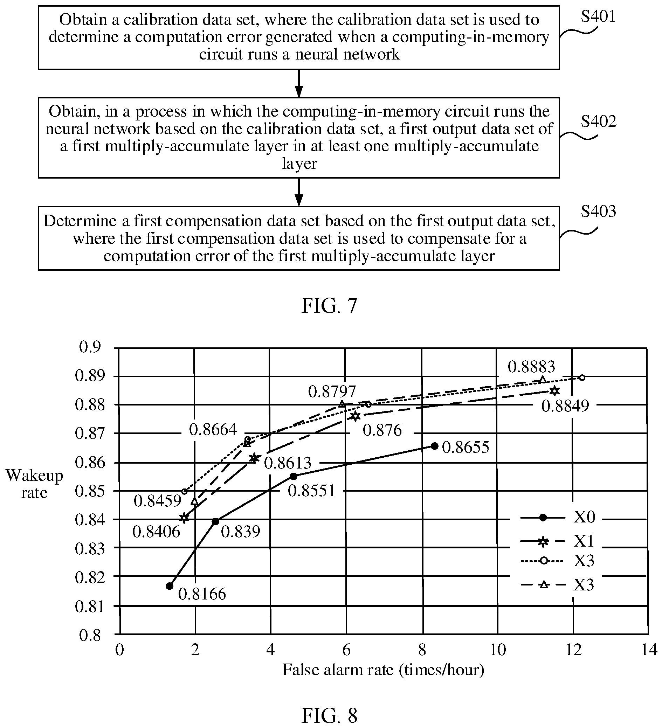

In addition, a compensation data set corresponding to each of the at least one multiply-accumulate layer may be determined by an electronic device such as a server. Alternatively, after the electronic device configures the configuration information in the computing-in-memory circuit, the computing-in-memory circuit determines the compensation data set corresponding to each multiply-accumulate layer. The following provides description by using an example in which a process of determining the compensation data set is performed by the electronic device. After obtaining the corresponding compensation data set, the electronic device may write the obtained compensation data set into a location indicated by the configuration information. As shown in FIG. 7, the method may include the following steps.

S401: Obtain a calibration data set, where the calibration data set is used to determine a computation error generated when the computing-in-memory circuit runs the neural network.

The calibration data set may be a small-scale data set obtained from a training database used to train the neural network, the calibration data set may include an input data set of one or more multiply-accumulate layers in the neural network in an ideal state, and the input data set in the ideal state may also be referred to as a theoretical input data set. Optionally, the calibration data set may further include an output data set of one or more multiply-accumulate layers in the neural network in an ideal state, and the output data set in the ideal state may also be referred to as a theoretical output data set.

In a possible embodiment, after obtaining the calibration data set, the electronic device may control the computing-in-memory circuit to run the neural network based on the input data set in the calibration data set. Running the neural network may include: performing computation corresponding to a part of processing layers included in the neural network, for example, performing multiply-accumulate corresponding to one or more multiply-accumulate layers; or performing computation of all processing layers included in the neural network, in other words, performing computation from an input layer of the neural network to an output layer of the neural network.

S402: Obtain, in a process in which the computing-in-memory circuit runs the neural network based on the calibration data set, a first output data set of a first multiply-accumulate layer in the at least one multiply-accumulate layer.

The at least one multiply-accumulate layer may include one multiply-accumulate layer, or may include a plurality of multiply-accumulate layers. When the at least one multiply-accumulate layer includes the plurality of multiply-accumulate layers, the first multiply-accumulate layer may be one of the plurality of multiply-accumulate layers included in the at least one multiply-accumulate layer. For example, the neural network LeNet-5 shown in FIG. 5 is used as an example. It is assumed that the at least one multiply-accumulate layer includes Conv_3 and FC_2, and the first multiply-accumulate layer is Conv_3.

In addition, the first output data set is an actual output data set corresponding to the first multiply-accumulate layer. The actual output data set may be an output data set generated when the computing-in-memory circuit performs multiply-accumulate corresponding to the first multiply-accumulate layer. Alternatively, the actual output data set may be an output data set generated at the last first multiply-accumulate layer in the plurality of multiply-accumulate layers when the computing-in-memory circuit sequentially performs multiply-accumulate corresponding to the plurality of multiply-accumulate layers in the neural network. That the computing-in-memory circuit executes each multiply-accumulate layer may be understood as: The computing-in-memory circuit performs multiply-accumulate on an input data set received by the multiply-accumulate layer and a weight data set of the multiply-accumulate layer, to obtain an output data set of the multiply-accumulate layer.

In a possible embodiment, the calibration data set includes a first input data set of the first multiply-accumulate layer, and the first output data set is generated by the computing-in-memory circuit by running the first multiply-accumulate layer based on the first input data set. The first input data set may be an ideal input data set of the first multiply-accumulate layer, the first output data set is an actual output data set generated when the computing-in-memory circuit performs multiply-accumulate corresponding to the first multiply-accumulate layer, that is, performs multiply-accumulate on the ideal input data set and a first weight data set, and the first weight data set is a weight data set corresponding to the first multiply-accumulate layer. For example, the neural network LeNet-5 shown in FIG. 5 is used as an example. It is assumed that the first multiply-accumulate layer is Conv_3, and the computing-in-memory circuit performs multiply-accumulate on an input data set of Conv_3 and a weight data set of Conv_3, to generate the first output data set.

Similarly, when the at least one multiply-accumulate layer includes the plurality of multiply-accumulate layers, for a multiply-accumulate layer other than the first multiply-accumulate layer in the plurality of multiply-accumulate layers, a manner similar to that of the first multiply-accumulate layer may be used, to determine an actual output data set corresponding to another multiply-accumulate layer. Specifically, the at least one multiply-accumulate layer further includes a second multiply-accumulate layer, and the second multiply-accumulate layer is a multiply-accumulate layer at a lower layer of the first multiply-accumulate layer. The method may further include: obtaining a second output data set of the second multiply-accumulate layer.

Optionally, the second output data set may be generated by the computing-in-memory circuit by running the first multiply-accumulate layer to the second multiply-accumulate layer based on the first input data set. For example, the neural network LeNet-5 shown in FIG. 5 is used as an example. It is assumed that the first multiply-accumulate layer is FC_1, and the second multiply-accumulate layer is FC_2. The computing-in-memory circuit may perform multiply-accumulate on an input data set of FC_1 and a weight data set of FC_1 to generate a data set D1 (where, in this case, D1 is used as an input data set when the second multiply-accumulate layer is FC_2), and perform multiply-accumulate on the data set D1 and a weight data set of FC_2 to generate the second output data set. Alternatively, the calibration data set further includes a second input data set of the second multiply-accumulate layer, and the second output data set may be generated by the computing-in-memory circuit by running the second multiply-accumulate layer based on the second input data set. For example, the neural network LeNet-5 shown in FIG. 5 is used as an example. It is assumed that the second multiply-accumulate layer is FC_2. The computing-in-memory circuit may perform multiply-accumulate on the second input data set and a weight data set of FC_2 to generate the second output data set.

In another possible embodiment, the calibration data set may include a third input data set of a third multiply-accumulate layer of the neural network (where, for example, the third multiply-accumulate layer may be a multiply-accumulate layer closest to the input layer of the neural network), and the first output data set is generated by the computing-in-memory circuit by running, based on the first input data set, the third multiply-accumulate layer to the first multiply-accumulate layer that are of the neural network. For example, the neural network LeNet-5 shown in FIG. 5 is used as an example. It is assumed that the first multiply-accumulate layer is FC_2, and the third multiply-accumulate layer is Conv1. The first output data set may be an output data set obtained by the computing-in-memory circuit by performing multiply-accumulate corresponding to Conv1 to FC_2.

S403: Determine a first compensation data set based on the first output data set, where the first compensation data set is used to compensate for a computation error of the first multiply-accumulate layer.

When the first output data set of the first multiply-accumulate layer is obtained, the first compensation data set may be determined based on the first output data set and an ideal output data set that are of the first multiply-accumulate layer, and the first compensation data set may be used to compensate the output data set of the first multiply-accumulate layer in a process in which the computing-in-memory circuit performs multiply-accumulate on the first multiply-accumulate layer, when the computing-in-memory circuit subsequently runs the neural network.

Similarly, in the method, when the second output data set of the second multiply-accumulate layer is further obtained, the method may further include: determining a second compensation data set based on the second output data set, for example, determining the second compensation data set based on the second output data set and an ideal output data set that are of the second multiply-accumulate layer. The second compensation data set may be used to compensate the output data set of the second multiply-accumulate layer when the computing-in-memory circuit subsequently runs the neural network.

Optionally, the foregoing compensation data set (for example, the first compensation data set or the second compensation data set) may be a column offset average value set, a quadratic correction function set, or a linear correction function set. The compensation data set may include a plurality of columns of compensation parameters, and each column of the plurality of columns of compensation parameters may be used to compensate one column in an output data set of a corresponding multiply-accumulate layer. The following uses a compensation data set of one multiply-accumulate layer as an example to separately describe in detail cases in which the compensation data set is the column offset average value set, the quadratic correction function set, and the linear correction function set.

Case 1: The compensation data set is the column offset average value set, so that a compensation parameter of each column may be referred to as one column offset average value. It is assumed that an input data set of the multiply-accumulate layer includes input data of p rows and m columns (where p times of inference need to be performed), a weight data set includes weight data of m rows and n columns, and both an actual output data set and an ideal output data set that are of the multiply-accumulate layer include output data of p rows and n columns. In this case, the column offset average value set *offset* may be represented using the following formula (2). In the formula, $O_{real}$ represents actual output data, $O_{ideal}$ represents ideal output data, $E$ represents a computation error, and $O_{compensational}$ may represent data (also referred to as a correction function) obtained by compensating the actual output data.

$$E = O_{real} - O_{ideal}$$

$$offset = \frac{\left[ \sum_{i=0}^{p-1} E_{i0}, \sum_{i=0}^{p-1} E_{i1}, \sum_{i=0}^{p-1} E_{i2}, \cdots, \sum_{i=0}^{p-1} E_{i(n-1)} \right]}{p} \quad (2).$$

$$O_{compensational} = O_{real} - offset$$

Case 2: The compensation data set is the quadratic correction function set, so that compensation parameters of each column may be referred to as a quadratic correction function. It is assumed that an input data set of the multiply-accumulate layer includes input data of p rows and m columns (where p times of inference need to be performed), a weight data set includes weight data of m rows and n columns, and both an actual output data set and an ideal output data set that are of the multiply-accumulate layer include output data of p rows and n columns. In this case, the quadratic correction function may be represented using the following formula (2). In the formula, $O_{real}$ represents actual output data, $O_{ideal}$ represents ideal output data, [a, $a_1$, $a_2$] represents parameters (which are respectively three n-dimensional vectors) that are of the quadratic correction function of each column and that are computed through p times of inference, $O_{compensational}$ may represent data (also referred to as a correction function) obtained by compensating the actual output data, deg represents a degree of the fitting polynomial is 2, and ployfit represents a fitting function (to be specific, the function used to compute the compensation parameters).

$$[a_0, a_1, a_2] = polyfit\left(O_{real}, O_{ideal}, \deg = 2\right)$$
$$O_{compensational} = a_0 \times O_{real}^2 + a_1 \times O_{real} + a_2 \qquad (3).$$

Case 3: The compensation data set is the linear correction function set, so that compensation parameters of each column may be referred to as a linear correction function. When the compensation data set is the linear correction function set, descriptions related to the function are similar to the descriptions used when the compensation data set is the quadratic correction function set. A difference between the two lies only in that a degree of the linear correction function is 1. Details are not described herein again in this embodiment of this application.

Optionally, when the compensation data set is the column offset average value set, the compensation data set may be used to perform compensation in analog domain and/or digital domain. When the compensation data set is the quadratic correction function set or the linear correction function set, the compensation data set may be used to perform compensation in digital domain. When the compensation data set is the column offset average value set, this method has characteristics of simple computation of compensation data, low computation overheads, no impact on a delay, and high resource benefits.

In this embodiment of this application, when the compensation data set is separately the column offset average value set, the quadratic correction function set, or the linear correction function set, in a process in which the computing-in-memory circuit runs a voice wakeup neural network, results obtained by compensating a last multiply-accumulate layer in the neural network by using the compensation data set are compared. For example, as shown in FIG. 8, X0 represents a curve of a false alarm rate (false alarm rate) and a wakeup rate (wakeup rate) that are obtained when the last multiply-accumulate layer is not compensated, X1 represents a curve of a false alarm rate and a wakeup rate after the last multiply-accumulate layer is compensated using the column offset average value set, X2 represents a curve of a false alarm rate and a wakeup rate after the last multiply-accumulate layer is compensated using the quadratic correction function set, X3 represents a curve of a false alarm rate and a wakeup rate after the last multiply-accumulate layer is compensated using the linear correction function set, and a unit of the false alarm rate may be times (times)/hour (hour). It can be learned from FIG. 8 that, in this embodiment of this application, after the compensation is performed on the last multiply-accumulate layer in the neural network by using the foregoing compensation data set, a corresponding wakeup rate is significantly increased in a case of a same false alarm rate of the neural network.

For ease of understanding, the following uses examples in which the at least one multiply-accumulate layer separately includes the last multiply-accumulate layer in the neural network, all multiply-accumulate layers in the neural network, and several multiply-accumulate layers in the neural network, to describe the technical solutions provided in embodiments of this application.

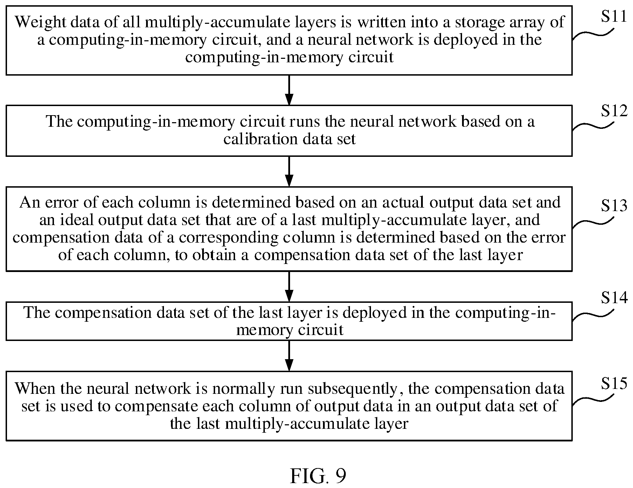

In a first embodiment, the at least one multiply-accumulate layer includes the last multiply-accumulate layer in the neural network. In this case, a process of compensating for a computation error generated when the computing-in-memory circuit runs the neural network may be shown in FIG. 9.

For example, as shown in FIG. 9, the method includes the following steps. S11: Weight data of all multiply-accumulate layers of the neural network is written into a storage array of the computing-in-memory circuit, and the neural network is deployed in the computing-in-memory circuit. S12: The computing-in-memory circuit runs the neural network based on a calibration data set, where the calibration data set may include an input data set corresponding to an input layer of the neural network and an ideal output data set of the last layer of the neural network. S13: An error of each column is determined based on an actual output data set and the ideal output data set that are of the last multiply-accumulate layer, where the error is an accumulated error (for example, including computation errors of other layers before the last multiply-accumulate layer), and compensation data of a corresponding column is determined based on the error of each column, to obtain a compensation data set of the last layer. S14: The compensation data set of the last layer is deployed in the computing-in-memory circuit, where the step may include configuring corresponding configuration information for the computing-in-memory circuit, and writing the compensation data set into a compensation circuit indicated by the configuration information. S15: When the computing-in-memory circuit subsequently runs the neural network normally, the compensation data set is used to compensate each column of output data in the output data set of the last multiply-accumulate layer.

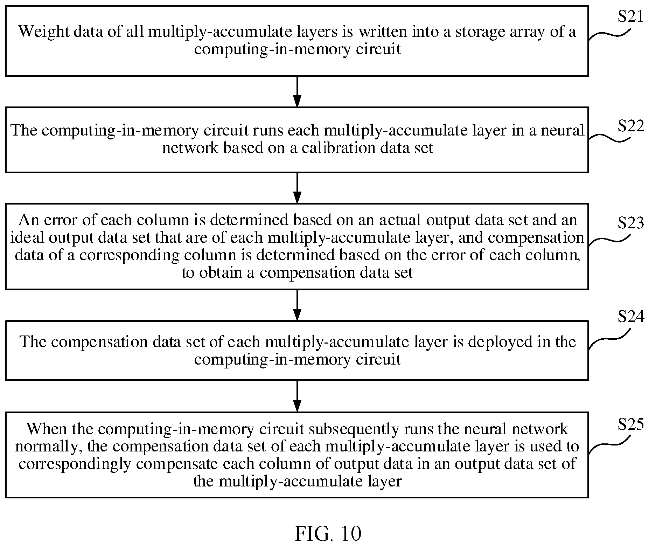

In a second embodiment, the at least one multiply-accumulate layer includes all the multiply-accumulate layers in the neural network. In this case, a process of compensating for a computation error generated when the computing-in-memory circuit runs the neural network may be shown in FIG. 10.

For example, as shown in FIG. 10, the method includes the following steps. S21: Weight data of all the multiply-accumulate layers of the neural network is written into a storage array of the computing-in-memory circuit, and in this case, the neural network may not be deployed in the computing-in-memory circuit. S22: The computing-in-memory circuit runs each multiply-accumulate layer in the neural network based on a calibration data set, where the calibration data set may include an input data set and an ideal output data set that correspond to each multiply-accumulate layer. S23: An error of each column is determined based on an actual output data set and the ideal output data set that are of each multiply-accumulate layer, where the error does not include accumulated errors of previous layers, and compensation data of a corresponding column is determined based on the error of each column, to obtain a compensation data set. S24: The compensation data set of each multiply-accumulate layer is deployed in the computing-in-memory circuit, where the step may include configuring corresponding configuration information for the computing-in-memory circuit, and writing the compensation data set of each multiply-accumulate layer into a compensation circuit indicated by the configuration information. S25: When the computing-in-memory circuit subsequently runs the neural network normally, the compensation data set of each multiply-accumulate layer is used to correspondingly compensate each column of output data in the output data set of the multiply-accumulate layer.

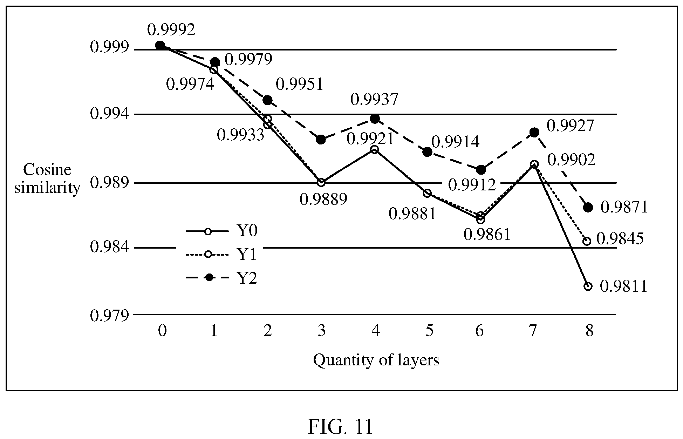

In this embodiment of this application, in FIG. 11, results of compensating only the last multiply-accumulate layer in the neural network and compensating all the multiply-accumulate layers in the neural network are compared, and an example in which the compensation data set is the column offset average value set is used. In FIG. 11, Y0 represents a cosine similarity (cosine similarity) under various quantities of multiply-accumulate layers when compensation is not performed, Y1 represents a cosine similarity under various quantities of multiply-accumulate layers after only the last multiply-accumulate layer is compensated, and Y2 represents a cosine similarity under various quantities of multiply-accumulate layers after each multiply-accumulate layer is compensated. It can be learned from FIG. 11 that, in this embodiment of this application, the cosine similarity obtained by compensating all the multiply-accumulate layers of the neural network is clearly higher than the cosine similarity obtained by compensating only the last multiply-accumulate layer of the neural network. However, when all the multiply-accumulate layers of the neural network are compensated, a quantity of compensation data sets and a computation amount are greatly increased, and a processing delay basically remains unchanged.

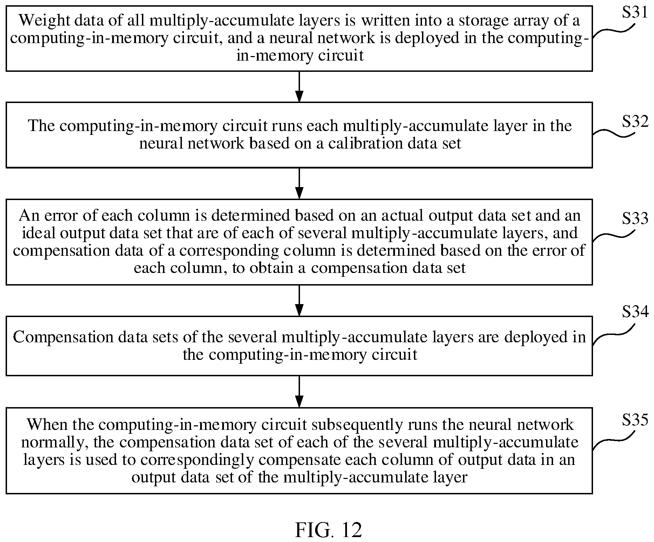

In a third embodiment, the at least one multiply-accumulate layer includes the several multiply-accumulate layers in the neural network. In this case, a process of compensating for a computation error generated when the computing-in-memory circuit runs the neural network may be shown in FIG. 12.

For example, as shown in FIG. 12, the method includes the following steps. S31: Weight data of all multiply-accumulate layers of the neural network is written into a storage array of the computing-in-memory circuit, and the neural network is deployed in the computing-in-memory circuit. S32: The computing-in-memory circuit runs the neural network based on a calibration data set, where the calibration data set may include input data sets and ideal output data sets that correspond to the several multiply-accumulate layers. S33: An error of each column is determined based on an actual output data set and an ideal output data set that are of each of the several multiply-accumulate layers, and compensation data of a corresponding column is determined based on the error of each column, to obtain a compensation data set. S34: The compensation data set of each of the several multiply-accumulate layers is deployed in the computing-in-memory circuit, where the step may include configuring corresponding configuration information for the computing-in-memory circuit, and writing the compensation data set of each of the several multiply-accumulate layers into a compensation circuit indicated by the configuration information. S35: When the computing-in-memory circuit subsequently runs the neural network normally, the compensation data set of each of the several multiply-accumulate layers is used to correspondingly compensate each column of output data in an output data set of the multiply-accumulate layer.

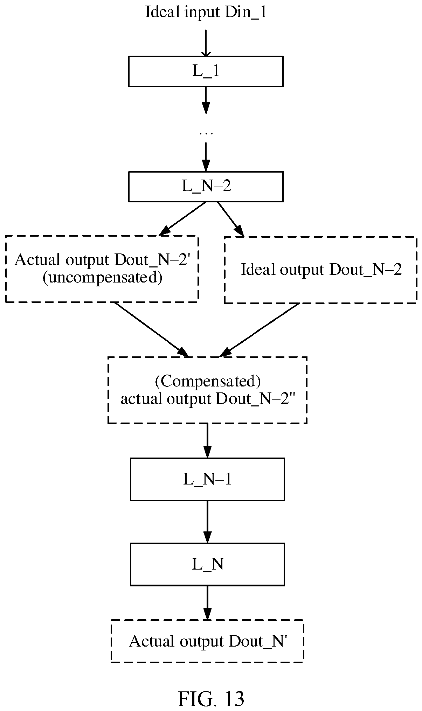

Optionally, when the at least one multiply-accumulate layer includes the several multiply-accumulate layers in the neural network, the computing-in-memory circuit may sequentially determine compensation data sets of the multiply-accumulate layers based on a sequence of the several multiply-accumulate layers. Optionally, the input data sets corresponding to the several multiply-accumulate layers may be ideal input data sets provided in the calibration data set, or may be obtained by compensating output data sets of previous multiply-accumulate layers respectively corresponding to the several multiply-accumulate layers. That is, a compensated output data set of a previous level is used as an input data set of a next level. For example, as shown in FIG. 13, it is assumed that the neural network includes N multiply-accumulate layers that are respectively represented as L_1 to L_N, several multiply-accumulate layers that need to be compensated include L_N-2 and L_N, and a calibration data set may include an ideal input data set Din_1 of L_1, an ideal input data set Din_N-2 and an ideal output data set Dout_N-2 that are of L_N-2, and an ideal input data set Din_N and an ideal output data set Dout_N that are of L_N. In this case, the computing-in-memory circuit may run L_1 to L_N-2 based on Din_1, to obtain an actual output data set Dout_N-2' of L_N-2, and determine a compensation data set of L_N-2 to compensate L_N-2. Then, the computing-in-memory circuit runs L_N-2 to L_N based on an actual output data set Dout_N-2" generated after compensation for L_N-2, to obtain an actual output data set Dout_N' of L_N.

In another possible implementation, after the compensation data set corresponding to each of the at least one multiply-accumulate layer is determined, for each of the at least one multiply-accumulate layer, in addition to compensation in the foregoing compensation manners corresponding to analog domain and/or digital domain, a weight data set corresponding to the multiply-accumulate layer may be further adjusted based on the compensation data set corresponding to the multiply-accumulate layer, in other words, a computation error of the multiply-accumulate layer is compensated by adjusting the weight data set corresponding to the multiply-accumulate layer. This is not specifically limited in embodiments of this application.

According to the method provided in this embodiment of this application, when performing neural network computation based on the calibration data set, the computing-in-memory circuit may obtain an output data set of the at least one multiply-accumulate layer in the neural network in a computation process, determine a corresponding compensation data set based on the output data set of the at least one multiply-accumulate layer, and write the corresponding compensation data set into the computing-in-memory circuit. In this way, when the computing-in-memory circuit performs neural network computation subsequently, a computation error of the at least one multiply-accumulate layer may be compensated using the compensation data set corresponding to the at least one multiply-accumulate layer. Therefore, precision of multiply-accumulate is improved and an end-to-end effect of the neural network is ensured.

Based on this, an embodiment of this application further provides a computing-in-memory circuit. The computing-in-memory circuit may be configured to run a neural network, and the computing-in-memory circuit includes at least one multiply-accumulate array corresponding to at least one multiply-accumulate layer in the neural network. Each multiply-accumulate array includes H storage rows, one first signal line is shared in each of the H storage rows, the H storage rows correspond to n storage columns and one second signal line is shared in each storage column, and H and n are positive integers greater than 1.

For a multiply-accumulate array corresponding to any multiply-accumulate layer, m storage rows in the H storage rows are used to store a weight data set of the multiply-accumulate layer, where m is a positive integer less than H; first signal lines corresponding to the m storage rows are configured to receive an input data set of the multiply-accumulate layer; at least one of (H-m) storage rows in the H storage rows is used to store a compensation weight set of the multiply-accumulate layer; a first signal line corresponding to the at least one of (H-m) storage rows is configured to receive preset input data, where the preset input data and the compensation weight set are used to determine a compensation data set of the multiply-accumulate layer; and second signal lines corresponding to the n storage columns are configured to output a computation result of the multiply-accumulate layer.

Optionally, the m storage rows may be of a same type as the (H-m) storage rows. For example, types of the m storage rows and the (H-m) storage rows may be input storage rows (or referred to as input rows). That is, input data of each storage row may be variable. The m storage rows and the (H-m) storage rows may be adjacent. For example, the (H-m) storage rows may be adjacent to and located below the m storage rows. In addition, the x storage rows may be consecutive or inconsecutive in the H storage rows. This is not specifically limited in embodiments of this application.

In addition, when a compensation data set corresponding to one multiply-accumulate layer can be compensated using a single storage row, the at least one of (H-m) storage rows may include one storage row. Alternatively, when a compensation data set corresponding to one multiply-accumulate layer cannot be compensated using a single storage row, but can be compensated using a plurality of storage rows, the at least one of (H-m) storage rows may include the plurality of storage rows.

Further, in addition to the H storage rows, the multiply-accumulate array may further include y bias rows, the y bias rows are used to store a bias data set corresponding to the multiply-accumulate layer, the y bias rows are usually of a different type from the H storage rows, and input data of the y bias rows is fixed.

In addition, rows and columns in the foregoing multiply-accumulate array are interchangeable. For example, alternatively, the n storage columns may be set to a row direction, and the H storage rows and/or the y bias rows may be set to a column direction.

Optionally, for each multiply-accumulate array, the computing-in-memory circuit may further include a plurality of DACs, a plurality of SH circuits, and a plurality of ADCs. Each of the plurality of storage rows may be connected to one DAC, each of a plurality of storage columns may be connected to one SH circuit, and SH circuits in a plurality of storage columns may be connected to one ADC.

For example, as shown in FIG. 6A or FIG. 6B, any multiply-accumulate array in the computing-in-memory circuit may include H storage rows, the H storage rows may include m storage rows and (H-m) (represented as x) storage rows, and the m storage rows and the x storage rows share n storage columns. Each multiply-accumulate array may further include m first signal lines (represented as SL11 to SL1m) connected to the m storage rows in a one-to-one correspondence, x first signal lines (represented as SL21 to SL2x) connected to the x storage rows in a one-to-one correspondence, and n second signal lines (represented as SL31 to SL3n) connected to the n storage columns in a one-to-one correspondence. The computing-in-memory circuit may further include H DACs, n SH circuits, and at least two ADCs, each storage row is connected to one DAC, each storage column is connected to one SH circuit, and SH circuits in three storage columns may be connected to one ADC.

Memory cells in the m storage rows may be configured to store a weight data set corresponding to the multiply-accumulate layer. For example, m memory cells located in a first storage column may be configured to store weight data $G_1$ to $G_m$ respectively. The m first signal lines SL11 to SL1m may be configured to receive an input data set corresponding to the multiply-accumulate layer. For example, correspondingly received input data converted by DACs may be $V_1$ to $V_m$. The x storage rows may be used to store a compensation weight set. For example, x memory cells located in the first storage column may be configured to store compensation weights $G_{m+1}$ to $G_{m+x}$ respectively. The x second signal lines SL21 to SL2x may all be configured to receive a fixed value, and the fixed value may be an acceptable maximum voltage $V_{max}$ after being converted by DACs. Therefore, compensation data corresponding to the first storage column may be $V_{max} \times G_{m+1} + ... + V_{max} \times G_{m+x}$. A sum of currents obtained through convergence on a third signal line SL31 correspondingly connected to the first storage column is expressed as:

$$I_1 = V_1 \times G_1 + ... + V_m \times G_m + V_{max} \times G_{m+1} + ... + V_{max} \times G_{m+x}.$$

In the computing-in-memory circuit provided in this embodiment of this application, the multiply-accumulate array includes the H storage rows, the m storage rows in the H storage rows may be used to store the weight data set of the multiply-accumulate layer, the first signal lines corresponding to the m storage rows may be configured to receive the input data set of the multiply-accumulate layer, the at least one of (H-m) storage rows may be configured to store the compensation weight set of the multiply-accumulate layer, and the first signal line corresponding to the at least one of (H-m) storage rows may be configured to receive the preset input data. In other words, the m storage rows may be used to perform multiply-accumulate at a multiply-accumulate layer corresponding to the computing-in-memory circuit, the (H-m) storage rows may be used to compensate for a computation result of the multiply-accumulate, and outputs of the second signal lines corresponding to the n storage columns are a computation result obtained by compensating for a computation error of the multiply-accumulate layer. In this way, when the multiply-accumulate layer is executed, the multiply-accumulate array can compensate for the computation error through the at least one of (H-m) storage rows. Therefore, precision of the multiply-accumulate is improved, an end-to-end effect of the neural network is ensured, and an increase in a computation amount due to compensation is avoided.

The foregoing mainly describes the methods provided in embodiments of this application from a perspective of an electronic device. It may be understood that, to implement the foregoing functions, the electronic device includes a corresponding hardware structure and/or a corresponding software module for performing each function. A person of ordinary skill in the art should easily be aware that, with reference to structures and algorithm steps of examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the apparatus for compensating a neural network may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

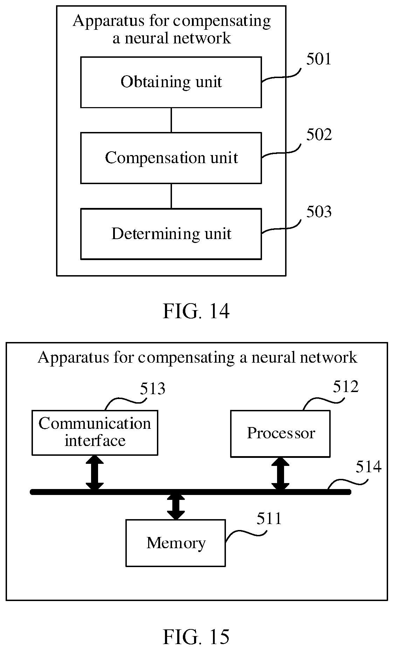

When each functional module is obtained through division based on each corresponding function, FIG. 14 is a diagram of a possible structure of the apparatus for compensating a neural network in the foregoing embodiments. The apparatus includes an obtaining unit 501 and a compensation unit 502. The obtaining unit 501 is configured to support the apparatus in performing S301 in the method embodiments. The compensation unit 502 is configured to support the apparatus in performing S302 in the method embodiments. Further, the apparatus may further include a determining unit 503. The obtaining unit 501 is further configured to support the apparatus in performing S401 and S402 in the method embodiments. The determining unit 503 is configured to support the apparatus in performing S403 in the method embodiments. Optionally, the apparatus may be further configured to perform one or more steps of S11 to S15 in the method embodiments, perform one or more steps of S21 to S25 in the method embodiments, or perform one or more steps of S31 to S35 in the method embodiments.

When hardware is used for implementation, the compensation unit 502 and the determining unit 503 may be processors of the apparatus for compensating a neural network, the obtaining unit 501 may be a receiver of the apparatus for compensating a neural network, the receiver and a transmitter may usually be integrated together and referred to as a transceiver, and the transceiver may alternatively be replaced with a communication interface.

FIG. 15 is a diagram of a structure of another apparatus for compensating a neural network according to an embodiment of this application. The apparatus includes a processor 512 and a communication interface 513. The processor 512 is configured to control and manage an action of the apparatus. For example, the processor 512 is configured to support the apparatus in performing one or more steps of S301 and S302, S401 to S403, S11 to S15, S21 to S25, or S31 to S35 in the foregoing method embodiments, and/or another process of the techniques described in this specification. In addition, the apparatus may further include a memory 511 and a bus 514. The processor 512, the communication interface 513, and the memory 511 are connected to each other through the bus 514. The communication interface 513 is configured to support the apparatus in performing communication. The memory 511 is configured to store program code and data that are of the apparatus.

The processor 512 may be a central processing unit, a general-purpose processor, a baseband processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. The processor may alternatively be a combination for implementing a computing function, for example, a combination including one or more microprocessors or a combination of a digital signal processor and a microprocessor. The bus 514 may be a peripheral component interconnect (peripheral component interconnect, PCI) bus, an extended industry standard architecture (extended industry standard architecture, EISA) bus, or the like. The bus 514 may be classified into an address bus, a data bus, a control bus, and the like. For ease of representation, only one bold line is used to represent the bus in the figure, but this does not mean that there is only one bus or only one type of bus.

It should be noted that all related content of the steps in the foregoing method embodiments may be cited in function descriptions of corresponding functional modules. For details, refer to the descriptions in the foregoing method embodiments. Details are not described herein again in embodiments of this application.

The components of the foregoing apparatus for compensating a neural network in embodiments of this application are respectively configured to implement functions of corresponding steps of the foregoing method for compensating a neural network. Because the steps are described in detail in the foregoing embodiments of the method for compensating a neural network, details are not described herein again.

In several embodiments provided in this application, it should be understood that the disclosed apparatuses and methods may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed.

The units described as separate parts may or may not be physically separate, and parts displayed as units may be one or more physical units, that is, may be located in one place, or may be distributed in different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

An embodiment of this application further provides a computer-readable storage medium. The computer-readable storage medium stores instructions. When the instructions are run on a device (where, for example, the device may be a single-chip microcomputer, a chip, a computer, a processor, or the like), the device is enabled to perform one or more steps in the foregoing method embodiments. When the foregoing modules in the foregoing apparatus for compensating a neural network are implemented in a form of a software functional unit and sold or used as an independent product, the modules may be stored in the computer-readable storage medium.

Based on such an understanding, an embodiment of this application further provides a computer program product including instructions, and the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) or a processor of the computer device to perform all or some of the steps of the method described in embodiments of this application.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A method for compensating a neural network based on a computing-in-memory circuit, wherein the neural network comprises a plurality of multiply-accumulate layers, and the method comprises:

   obtaining configuration information, wherein the configuration information indicates at least one to-be-compensated multiply-accumulate layer in the plurality of multiply-accumulate layers and at least one compensation circuit corresponding to the at least one multiply-accumulate layer, and the at least one compensation circuit is configured to compensate for a computation error of the at least one multiply-accumulate layer; and compensating, in a process in which the computing-in-memory circuit runs the neural network, a computation result of the at least one multiply-accumulate layer through the at least one compensation circuit indicated by the configuration information.

2. The method according to claim 1, wherein for each of the at least one multiply-accumulate layer, the computing-in-memory circuit comprises a plurality of first storage rows for running the multiply-accumulate layer, a compensation circuit corresponding to the multiply-accumulate layer comprises at least one second storage row, and the at least one second storage row and the plurality of first storage rows share a plurality of storage columns.

3. The method according to claim 2, wherein the at least one second storage row is used to store a compensation weight set corresponding to the multiply-accumulate layer, and the compensation weight set is obtained based on a compensation data set corresponding to the multiply-accumulate layer.

4. The method according to any one of claims 1 to 3, wherein for each of the at least one multiply-accumulate layer, the computing-in-memory circuit comprises the plurality of first storage rows for running the multiply-accumulate layer, the compensation circuit corresponding to the multiply-accumulate layer comprises a plurality of registers configured to store the compensation data set, and the plurality of registers are in a one-to-one correspondence with the plurality of storage columns corresponding to the plurality of first storage rows.

5. The method according to any one of claims 1 to 4, wherein the method comprises:

obtaining a calibration data set, wherein the calibration data set is used to determine a computation error generated when the computing-in-memory circuit runs the neural network;
obtaining, in a process in which the computing-in-memory circuit runs the neural network based on the calibration data set, a first output data set of a first multiply-accumulate layer in the at least one multiply-accumulate layer; and
determining a first compensation data set based on the first output data set, wherein the first compensation data set is used to compensate for a computation error of the first multiply-accumulate layer.

6. The method according to claim 5, wherein the calibration data set comprises a first input data set of the first multiply-accumulate layer, and the first output data set is generated by the computing-in-memory circuit by running the first multiply-accumulate layer based on the first input data set.

7. The method according to claim 5 or 6, wherein the method further comprises:

obtaining a second output data set of a second multiply-accumulate layer in the at least one multiply-accumulate layer, wherein the second multiply-accumulate layer is a multiply-accumulate layer at a lower layer of the first multiply-accumulate layer; and
determining a second compensation data set based on the second output data set, wherein the second compensation data set is used to compensate for a computation error of the second multiply-accumulate layer.

8. The method according to claim 7, wherein the calibration data set further comprises a second input data set of the second multiply-accumulate layer, and the second output data set is generated by the computing-in-memory circuit by running the second multiply-accumulate layer based on the second input data set.

9. The method according to claim 7, wherein the second output data set is generated by the computing-in-memory circuit by running the first multiply-accumulate layer to the second multiply-accumulate layer based on the first input data set.

10. The method according to claim 5, wherein the calibration data set comprises a third input data set of a third multiply-accumulate layer, the third multiply-accumulate layer is a multiply-accumulate layer at an upper layer of the first multiply-accumulate layer, and the first output data set is generated by the computing-in-memory circuit by running the third multiply-accumulate layer to the first multiply-accumulate layer based on the third input data set.

11. A computing-in-memory circuit, wherein the computing-in-memory circuit is configured to run a neural network, the computing-in-memory circuit comprises at least one multiply-accumulate array corresponding to at least one multiply-accumulate layer in the neural network, each multiply-accumulate array comprises H storage rows, one first signal line is shared in each of the H storage rows, the H storage rows correspond to n storage columns and one second signal line is shared in each storage column, and H and n are positive integers greater than 1; and

for a multiply-accumulate array corresponding to any multiply-accumulate layer,
m storage rows in the H storage rows are used to store a weight data set of the multiply-accumulate layer, wherein m is a positive integer less than H;
first signal lines corresponding to the m storage rows are configured to receive an input data set of the multiply-accumulate layer;
at least one of (H-m) storage rows in the H storage rows is used to store a compensation weight set of the multiply-accumulate layer;
a first signal line corresponding to the at least one of (H-m) storage rows is configured to receive preset input data, wherein the preset input data and the compensation weight set are used to determine a compensation data set of the multiply-accumulate layer; and
second signal lines corresponding to the n storage columns are configured to output a computation result of the multiply-accumulate layer.

12. The circuit according to claim 11, wherein the m storage rows are of a same type as the (H-m) storage rows; and/or the m storage rows are adjacent to the (H-m) storage rows.

13. An apparatus for compensating a neural network based on a computing-in-memory circuit, wherein the neural network comprises a plurality of multiply-accumulate layers, and the apparatus comprises:

an obtaining unit, configured to obtain configuration information, wherein the configuration information indicates at least one to-be-compensated multiply-accumulate layer in the plurality of multiply-accumulate layers and at least one compensation circuit corresponding to the at least one multiply-accumulate layer, and the at least one compensation circuit is configured to compensate for a computation error of the at least one multiply-accumulate layer; and
a compensation unit, configured to compensate, in a process in which the computing-in-memory circuit runs the neural network, a computation result of the at least one multiply-accumulate layer through the at least one compensation circuit indicated by the configuration information.

14. The apparatus according to claim 13, wherein for each of the at least one multiply-accumulate layer, the computing-in-memory circuit comprises a plurality of first storage rows for running the multiply-accumulate layer, a compensation circuit corresponding to the multiply-accumulate layer comprises at least one second storage row, and the at least one second storage row and the plurality of first storage rows share a plurality of storage columns.

15. The apparatus according to claim 14, wherein the at least one second storage row is used to store a compensation weight set corresponding to the multiply-accumulate layer, and the compensation weight set is obtained based on a compensation data set corresponding to the multiply-accumulate layer.

16. The apparatus according to any one of claims 13 to 15, wherein for each of the at least one multiply-accumulate layer, the computing-in-memory circuit comprises the plurality of first storage rows for running the multiply-accumulate layer, the compensation circuit corresponding to the multiply-accumulate layer comprises a plurality of registers configured to store the compensation data set, and the plurality of registers are in a one-to-one correspondence with the plurality of storage columns corresponding to the plurality of first storage rows.

17. The apparatus according to any one of claims 13 to 16, wherein the apparatus further comprises a determining unit;

the obtaining unit is further configured to obtain a calibration data set, wherein the calibration data set is used to determine a computation error generated when the computing-in-memory circuit runs the neural network;
the obtaining unit is further configured to obtain, in a process in which the computing-in-memory circuit runs the neural network based on the calibration data set, a first output data set of a first multiply-accumulate layer in the at least one multiply-accumulate layer; and
the determining unit is configured to determine a first compensation data set based on the first output data set, wherein the first compensation data set is used to compensate for a computation error of the first multiply-accumulate layer.

18. The apparatus according to claim 17, wherein the calibration data set comprises a first input data set of the first multiply-accumulate layer, and the first output data set is generated by the computing-in-memory circuit by running the first multiply-accumulate layer based on the first input data set.

19. The apparatus according to claim 17 or 18, wherein

the obtaining unit is further configured to obtain a second output data set of a second multiply-accumulate layer in the at least one multiply-accumulate layer, wherein the second multiply-accumulate layer is a multiply-accumulate layer at a lower layer of the first multiply-accumulate layer; and
the determining unit is further configured to determine a second compensation data set based on the second output data set, wherein the second compensation data set is used to compensate for a computation error of the second multiply-accumulate layer.

20. The apparatus according to claim 19, wherein the calibration data set further comprises a second input data set of the second multiply-accumulate layer, and the second output data set is generated by the computing-in-memory circuit by running the second multiply-accumulate layer based on the second input data set.

21. The apparatus according to claim 20, wherein the second output data set is generated by the computing-in-memory circuit by running the first multiply-accumulate layer to the second multiply-accumulate layer based on the first input data set.

22. The apparatus according to claim 17, wherein the calibration data set comprises a third input data set of a third multiply-accumulate layer, the third multiply-accumulate layer is a multiply-accumulate layer at an upper layer of the first multiply-accumulate layer, and the first output data set is generated by the computing-in-memory circuit by running the third multiply-accumulate layer to the first multiply-accumulate layer based on the third input data set.

23. A computer-readable storage medium, wherein the computer-readable storage medium stores a computer program or instructions; and when the computer program or the instructions are run, the method for compensating a neural network based on a computing-in-memory circuit according to any one of claims 1 to 10 is implemented.

n columns

FIG. 1

Neural network

Hidden layer 220

Input layer 210

Intermediate layer 240

Intermediate layer 240

Output layer 230

Input a signal → Layer 1 → Layer 2 → ... → Layer (N–1) → Layer N → Processing result

FIG. 2

Input/Output
module
301

Switching
module 302

PE

Hardware
engine

Hardware
engine

Logical
engine

Logical
engine

...

Logical
engine

Hardware
engine

Hardware
engine

PE

Data processing
module
303

FIG. 3

Obtain configuration information, where the configuration information
indicates at least one to-be-compensated multiply-accumulate layer and
at least one compensation circuit corresponding to the at least one
multiply-accumulate layer

S301

Compensate, in a process in which a computing-in-memory circuit runs
a neural network, a computation result of the at least one multiply-
accumulate layer through the at least one compensation circuit indicated
by the configuration information

S302

FIG. 4

FIG. 5

FIG. 6A

FIG. 6B

| | |
|---|---|
| Obtain a calibration data set, where the calibration data set is used to determine a computation error generated when a computing-in-memory circuit runs a neural network | S401 |

↓

| | |
|---|---|
| Obtain, in a process in which the computing-in-memory circuit runs the neural network based on the calibration data set, a first output data set of a first multiply-accumulate layer in at least one multiply-accumulate layer | S402 |

↓

| | |
|---|---|
| Determine a first compensation data set based on the first output data set, where the first compensation data set is used to compensate for a computation error of the first multiply-accumulate layer | S403 |

FIG. 7

FIG. 8

| Weight data of all multiply-accumulate layers is written into a storage array of a computing-in-memory circuit, and a neural network is deployed in the computing-in-memory circuit | S11 |

↓

| The computing-in-memory circuit runs the neural network based on a calibration data set | S12 |

↓

| An error of each column is determined based on an actual output data set and an ideal output data set that are of a last multiply-accumulate layer, and compensation data of a corresponding column is determined based on the error of each column, to obtain a compensation data set of the last layer | S13 |

↓

| The compensation data set of the last layer is deployed in the computing-in-memory circuit | S14 |

↓

| When the neural network is normally run subsequently, the compensation data set is used to compensate each column of output data in an output data set of the last multiply-accumulate layer | S15 |

FIG. 9

Weight data of all multiply-accumulate layers is written into a storage array of a computing-in-memory circuit

S21

The computing-in-memory circuit runs each multiply-accumulate layer in a neural network based on a calibration data set

S22

An error of each column is determined based on an actual output data set and an ideal output data set that are of each multiply-accumulate layer, and compensation data of a corresponding column is determined based on the error of each column, to obtain a compensation data set

S23

The compensation data set of each multiply-accumulate layer is deployed in the computing-in-memory circuit

S24

When the computing-in-memory circuit subsequently runs the neural network normally, the compensation data set of each multiply-accumulate layer is used to correspondingly compensate each column of output data in an output data set of the multiply-accumulate layer

S25

FIG. 10

FIG. 11

Weight data of all multiply-accumulate layers is written into a storage array of a computing-in-memory circuit, and a neural network is deployed in the computing-in-memory circuit ⟍ S31

The computing-in-memory circuit runs each multiply-accumulate layer in the neural network based on a calibration data set ⟍ S32

An error of each column is determined based on an actual output data set and an ideal output data set that are of each of several multiply-accumulate layers, and compensation data of a corresponding column is determined based on the error of each column, to obtain a compensation data set ⟍ S33

Compensation data sets of the several multiply-accumulate layers are deployed in the computing-in-memory circuit ⟍ S34

When the computing-in-memory circuit subsequently runs the neural network normally, the compensation data set of each of the several multiply-accumulate layers is used to correspondingly compensate each column of output data in an output data set of the multiply-accumulate layer ⟍ S35

FIG. 12

Ideal input Din_1

L_1

...

L_N–2

Actual output Dout_N–2'
(uncompensated)

Ideal output Dout_N–2

(Compensated)
actual output Dout_N–2"

L_N–1

L_N

Actual output Dout_N'

FIG. 13

Apparatus for compensating
a neural network

Obtaining unit — 501

Compensation unit — 502

Determining unit — 503

FIG. 14

Apparatus for compensating a neural network

513

Communication
interface

512

Processor

514

511

Memory

FIG. 15

## INTERNATIONAL SEARCH REPORT

| International application No. |
|---|
| **PCT/CN2023/104035** |

**A.    CLASSIFICATION OF SUBJECT MATTER**

G06N3/063(2023.01)i

According to International Patent Classification (IPC) or to both national classification and IPC

**B.    FIELDS SEARCHED**

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNTXT, ENTXTC, VCN, VEN, DWPI, ENTXT: 存内计算, 存算, 补偿, 层, 存储列, 存储行, 寄存器, 神经网络, 误差, 配置, 确定, 指示, CIM, compute in memory, neural network, compensate, configure

**C.    DOCUMENTS CONSIDERED TO BE RELEVANT**

| Category* | Citation of document, with indication, where appropriate, of the relevant passages | Relevant to claim No. |
|---|---|---|
| X | US 2020380350 A1 (CIRRUS LOGIC INTERNATIONAL SEMICONDUCTOR LTD.) 03 December 2020 (2020-12-03) description, paragraphs 27-32 | 1, 13, 23 |
| A | US 2021192327 A1 (INDUSTRIAL TECHNOLOGY RESEARCH INSTITUTE) 24 June 2021 (2021-06-24) entire document | 1-23 |
| A | US 11106396 B1 (MACRONIX INTERNATIONAL CO., LTD.) 31 August 2021 (2021-08-31) entire document | 1-23 |
| A | CN 114723044 A (HANGZHOU ZHICUN INTELLIGENT TECHNOLOGY CO., LTD.) 08 July 2022 (2022-07-08) entire document | 1-23 |
| A | CN 114626514 A (HUAWEI TECHNOLOGIES CO., LTD.) 14 June 2022 (2022-06-14) entire document | 1-23 |
| A | WO 2020260067 A1 (AMS INTERNATIONAL AG) 30 December 2020 (2020-12-30) entire document | 1-23 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 August 2023** | **19 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/104035**

**C. DOCUMENTS CONSIDERED TO BE RELEVANT**

| Category* | Citation of document, with indication, where appropriate, of the relevant passages | Relevant to claim No. |
|---|---|---|
| A | CN 111931924 A (TSINGHUA UNIVERSITY) 13 November 2020 (2020-11-13)<br>entire document | 1-23 |

Form PCT/ISA/210 (second sheet) (July 2022)

INTERNATIONAL SEARCH REPORT
Information on patent family members

International application No.

**PCT/CN2023/104035**

| Patent document cited in search report | | | Publication date (day/month/year) | Patent family member(s) | | | Publication date (day/month/year) |
|---|---|---|---|---|---|---|---|
| US | 2020380350 | A1 | 03 December 2020 | None | | | |
| US | 2021192327 | A1 | 24 June 2021 | TW | 202125340 | A | 01 July 2021 |
| | | | | TWI | 787691 | B | 21 December 2022 |
| | | | | JP | 2021103521 | A | 15 July 2021 |
| US | 11106396 | B1 | 31 August 2021 | CN | 113741859 | A | 03 December 2021 |
| CN | 114723044 | A | 08 July 2022 | None | | | |
| CN | 114626514 | A | 14 June 2022 | None | | | |
| WO | 2020260067 | A1 | 30 December 2020 | DE | 112020003050 | T5 | 30 June 2022 |
| | | | | US | 2022309331 | A1 | 29 September 2022 |
| | | | | CN | 114026572 | A | 08 February 2022 |
| CN | 111931924 | A | 13 November 2020 | CN | 111931924 | B | 13 December 2022 |

Form PCT/ISA/210 (patent family annex) (July 2022)

**EP 4 557 170 A1**

**Patent documents cited in the description**

- CN 202210956475